(19) Europäisches Patentamt
European Patent Office
Office européen des brevets

(11) **EP 2 693 538 A1**

(12) **EUROPEAN PATENT APPLICATION**
published in accordance with Art. 153(4) EPC

(43) Date of publication:
**05.02.2014 Bulletin 2014/06**

(51) Int Cl.:
**H01M 4/58** (2010.01)   **C01B 25/45** (2006.01)
**H01M 4/36** (2006.01)

(21) Application number: **12764450.8**

(22) Date of filing: **28.03.2012**

(86) International application number:
**PCT/JP2012/058203**

(87) International publication number:
**WO 2012/133566 (04.10.2012 Gazette 2012/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2011 JP 2011071143**

(71) Applicants:
• **University of Hyogo**
  **Hyogo (JP)**
• **Mitsui Engineering & Shipbuilding Co., Ltd.**
  **Chuo-ku**
  **Tokyo 104-8439 (JP)**

(72) Inventors:
• **NAKAMURA, Tatsuya**
  **Himeji-shi**
  **Hyogo 671-2201 (JP)**

• **HATTA, Naoki**
  **Ichihara-shi**
  **Chiba 290-8531 (JP)**
• **SHIMOMURA, Noriyuki**
  **Ichihara-shi**
  **Chiba 290-8531 (JP)**
• **YOSHIDA, Yusuke**
  **Ichihara-shi**
  **Chiba 290-8531 (JP)**
• **MIYAUCHI, Hironari**
  **Ichihara-shi**
  **Chiba 290-8531 (JP)**

(74) Representative: **HOFFMANN EITLE**
**Patent- und Rechtsanwälte**
**Arabellastrasse 4**
**81925 München (DE)**

(54) **ELECTRODE MATERIAL FOR SECONDARY BATTERY, METHOD FOR PRODUCING ELECTRODE MATERIAL FOR SECONDARY BATTERY, AND SECONDARY BATTERY**

(57)    To solve the problem of low electrical conductivity and low lithium ion diffusivity derived from the crystal structure of an electrode active material having one-dimensional ion diffusivity, the electrode material for a secondary battery includes crystal primary particles of an electrode active material which releases or absorbs cations of a monovalent or divalent metal when subjected to electrochemical oxidation or reduction and which has a crystal lattice in which the cations can move only in a one-dimensional movable direction during the process of oxidation or reduction, and an ion-conductive substance and conductive carbon which coexist on the surface of the primary particles, wherein the ion-conductive substance has a property which allows two- or three-dimensional movement of the cations, and the cations are movable via a layer in which the ion-conductive substance and the conductive carbon coexist.

Fig.1

**Description**

**Technical Field**

The present invention relates to an electrode material for a secondary battery for use in a lithium ion secondary battery, a method for producing the electrode material for a secondary battery, and a secondary battery using the electrode material for a secondary battery.

**Background Art**

Examples of positive electrode materials for secondary batteries including metal lithium battery, lithium ion battery and lithium polymer battery include lithium-transition metal compounds, such as lithium cobaltate ($LiCoO_2$), lithium manganate ($LiMn_2O_4$), lithium nickelate ($LiNiO_2$), lithium iron phosphate ($LiFePO_4$).

Lithium iron phosphate is a positive electrode material having an olivine-type crystal structure. A positive electrode material having an olivine-type crystal structure is represented by a chemical formula $LiMPO_4$, wherein M is a transition metal, such as manganese (Mn), cobalt (Co) or nickel (Ni), apart from iron (Fe).

When used as a positive electrode material, $LiMPO_4$ has a large theoretical capacity (for example, 170 mAh/g for lithium iron phosphate) and a relatively high electromotive force [approximately 3.4 to 3.5 V for lithium iron phosphate and approximately 4.1 V for lithium manganese phosphate ($LiMnPO_4$) against an $Li/Li^+$ negative electrode]. In addition, $LiMPO_4$ is thermodynamically stable (for example, lithium iron phosphate releases little oxygen or heat up to approximately 400°C) and is therefore regarded as a preferred positive electrode material from a safety perspective as well.

Further, lithium iron phosphate and lithium manganese phosphate can be produced inexpensively from iron, manganese, phosphorus and so on, which are abundant resources, and are therefore expected to be promising positive electrode materials.

On the other hand, lithium iron phosphate, for example, has low electrical conductivity (electro-conductivity $\sigma \leq$ approximately $10^{-8}$ S/cm at 25°C) and low lithium-ion diffusivity (diffusion coefficient $D \leq$ approximately $10^{-13}$ cm$^2$/s at 25°C) and therefore cannot provide good output characteristics on its own. In addition, the electro-conductivity and self-diffusion coefficient of lithium manganese phosphate are both estimated to be lower than those of lithium iron phosphate by several orders of magnitude.

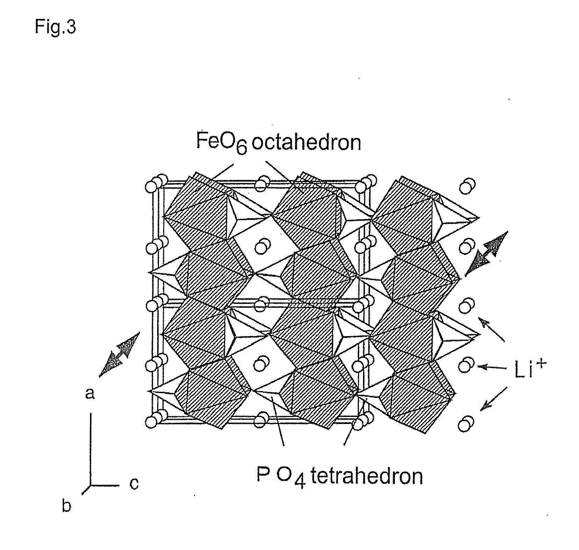

The low lithium-ion diffusivity is also derived from the crystal structure of the electrode active material having an olivine-type crystal structure (orthorhombic system, space group Pnma). An olivine-type electrode active material has a space group Pnma-type crystal lattice structure as shown in FIG. 3, in which cations of Li, Na, Mg and the like can move only in a movable direction in one-dimensional tunnels connecting lithium ion sites in the crystal b-axis direction in its crystal lattice. It is known that the degree of freedom of ion diffusion is low because the direction of movement of the cations is limited to only one direction for the above reason.

In addition, an olivine-type electrode active material has a lower density (approximately 3,400 to 3,800 kg/m$^3$) and therefore has a lower volume energy density than oxide-based active materials, such as lithium cobaltate. Thus, techniques to overcome the low electrical conductivity and the low lithium-ion diffusivity have been proposed.

Patent Literature 1 proposes a technique in which a carbon precursor which forms conductive carbon when pyrolyzed is used to cover the surface of particles of an electrode material, such as lithium iron phosphate, with conductive carbon by pyrolysis. In Patent Literature 1, the fact that sufficient electron conductivity for an electrode material can be imparted by the conductive carbon coating is described but there is no description of a measure to overcome the aforementioned low degree of freedom of lithium ion diffusion.

Patent Literature 2 discloses an electrode material obtained by coating the surface of particles of an olivine-type electrode active material having one-dimensional ion diffusivity as described above with a lithium ion-conductive substance layer.

In Patent Literature 2, the fact that the degree of freedom of lithium ion diffusion is increased by the lithium ion-conductive substance layer and consequently the output characteristics are improved is described but there is no description of the conductive carbon coating on the active material particles.

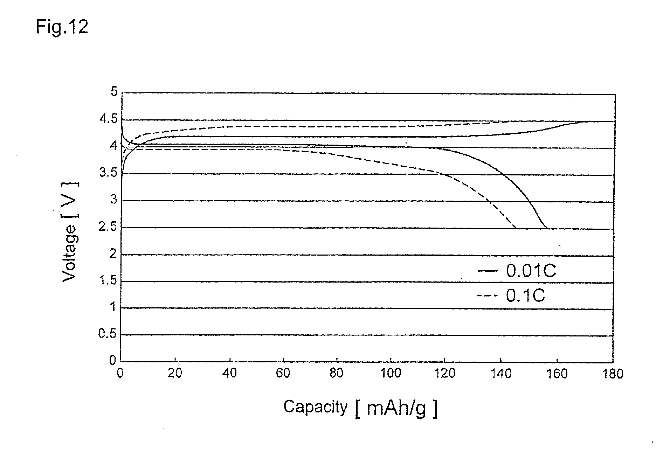

Paragraphs [0011] and [0012] of Patent Literature 2 disclose a positive electrode material obtained from an ingredient mixture having a non-stoichiometric composition with excessive amounts of a lithium source and a phosphoric acid source (Li:Fe:P = 1:0.9:0.95) by solid phase calcination at 700°C  and composed of a lithium iron phosphate ($LiFePO_4$) active material having a diameter of approximately 50 nm and coated with an amorphous or crystalline substance (= lithium ion conductive layer) having a composition in the range of $Li_4P_2O_7$ to $Li_3PO_4$ and its discharge characteristics up to 60C (Note: "NC" means the current condition under which the battery can be fully charged/discharged at a constant current in 1/N hours) (FIG. 12C to 12E). In the paragraphs, values exceeding approximately 135 mAh/g and 100 mAh/g are shown as initial discharge capacities at 44C and 60C, respectively.

In contrast, a lithium iron phosphate positive electrode material obtained from an ingredient compound having a stoichiometric composition (Li:Fe:P = 1:1:1) by solid phase calcination under the same conditions as described above and having a diameter of approximately 150 nm and its discharge rate characteristics are described as a comparative example in paragraphs [0014] and [0015] of Patent Literature 2. In this comparative example, discharge was not able to be made at 20C and the discharge rate characteristics were inferior to those of the above positive electrode material with a lithium ion conductive layer coating. However, the rate characteristics of the positive electrode material with a lithium ion conductive layer coating in Patent Literature 2 are seemingly very high, but accurate estimate cannot be made because important measurement conditions, such as the content of a conductive aid usually used in positive electrode formulations in a charge-discharge test, are barely described in the literature.

On the other hand, Non-Patent Literature 1, which is written by the same inventor as that of Patent Literature 2, discloses a lithium iron phosphate positive electrode material coated with an amorphous lithium ion conductive layer which is obtained by solid phase calcination under almost the same conditions except that the calcination temperature was changed to 600°C, and its discharge rate characteristics up to 50C and approximately 200C. The discharge rate characteristics up to 60C described in Patent Literature 2 are close to those up to 50C described in Non-Patent Literature 1, and it is, therefore, assumed that their measurement conditions were similar. In the Non-Patent Literature, positive electrode formulations containing 15 % by mass and 65 % by mass of carbon black as a conductive aid were used in the characteristic evaluation up to 50C and the characteristic evaluation up to 200C, respectively. The contents of carbon black are significantly high compared to the amount usually used in ordinary practical batteries (approximately 3 to 10 % by mass). This strongly suggests a current situation in which the lithium iron phosphate positive electrode materials disclosed in Patent Literature 2 and Non-Patent Literature 1, which have only a lithium ion conductive layer coating and are not covered with conductive carbon, have insufficient electrical conductivity to provide good charge-discharge characteristics at a high rate.

Patent Literature 3 discloses an electrode material prepared by mixing an active material having a surface covered with a lithium ion conductive polymer with an electron conductive agent.

Patent Literature 4 discloses an electrode material composed of an active material having a surface partially covered with a lithium ion conductive polymer with the portions not covered with the lithium ion conductive polymer being partially or entirely covered with a conductive agent or a conductive agent and a lithium ion conductive inorganic solid electrolyte.

Patent Literature 5 discloses an electrode material composed of an active material having a cover layer containing a conductive agent and a lithium ion conductive inorganic solid electrolyte on the surface thereof.

The inventions disclosed in Patent Literatures 3 to 5, which are all intended to overcome a decrease in charge-discharge capacity resulting from expansion and contraction of the active material during charge and discharge of the lithium secondary battery, are not made to overcome the low electrical conductivity and low degree of freedom of lithium ion diffusion of an active material itself, and there is no description of the effects corresponding thereto.

Related Art Document

Patent Literature

Patent Literature 1: JP-A-2001-015111
Patent Literature 2: Japanese Translation of PCT International Application Publication No. JP-T-2010-517240
Patent Literature 3: JP-A-Hei 11-7942
Patent Literature 4: JP-A-2002-373643
Patent Literature 5: JP-A-2003-59492

Non-Patent Literature

Non-Patent Literature 1: Byoungwoo Kang, Gerbrand Ceder, Nature (UK), Vol.458, p.190-193 (2009)

Summary of the Invention

Problem to be Solved by the Invention

An object of the present invention is to solve the problems of olivine-type electrode active materials, such as lithium iron phosphate and lithium manganese phosphate, i.e., one-dimensional lithium ion diffusivity and low ion diffusivity derived from their crystal structure and low electrical conductivity, and to provide an electrode material for a secondary battery which provides superior battery performance when used in a secondary battery, a method for producing the electrode material for a secondary battery, and a secondary battery using the electrode material for a secondary battery.

Means for Solving the Problem

For the purpose of accomplishing the above object, an electrode material for a secondary battery according to a first aspect of the present invention includes:

crystal primary particles of an electrode active material which releases or absorbs cations of a monovalent or divalent metal when subjected to electrochemical oxidation or reduction and which has a crystal lattice in which the cations can move only in one-dimensional allowable movement direction during the process of oxidation or reduction; and an ion-conductive substance and conductive carbon formed by pyrolysis of a carbon precursor which coexist on the surface of the primary particles,
wherein the ion-conductive substance has a property which allows two- or three-dimensional movement of the cations, and
the cations are movable via a layer in which the ion-conductive substance and the conductive carbon coexist.

The layer in which the ion-conductive substance and the conductive carbon coexist does not have to cover the entire surface of the primary particles as long as it covers at least 50 % of the entire surface of the individual primary particles. When the layer covers 50 % or more of the surface of the primary particles, the layer is preferably spread on the surface of the primary particles uniformly.
According to this aspect, because the ion-conductive substance has a property that allows two- or three-dimensional movement of the cations, the degree of freedom of the direction of movement of the cations is increased. In addition, because the cations are movable via a layer in which the ion-conductive substance and the conductive carbon coexist, a migration route of the cations is established, which leads to improvement of ion conductivity, and good electron conductivity, is provided by the conductive carbon. This allows easy passage of lithium ions between the inside and the outside of the primary particles of the electrode active material during charge and discharge when the electrode material is used in a secondary battery, resulting in improvement of the  charge-discharge utilization rate and the rate characteristics of the electrode active material.
The layer in which the ion-conductive substance and the conductive carbon coexist has a thickness of approximately 1 to 30 nm, preferably approximately 1 to 10 nm, as a whole.
An electrode material for a secondary battery according to a second aspect of the present invention includes:

crystal primary particles of an electrode active material which releases or absorbs cations of a monovalent or divalent metal when subjected to electrochemical oxidation or reduction and which has a crystal lattice in which the cations can move only in one-dimensional allowable movement direction during the process of oxidation or reduction;
an ion-conductive substance layer present on at least part of the surface of the primary particles; and
a conductive carbon layer formed by pyrolysis of a carbon precursor and present on at least part of the surface of at least the ion-conductive substance layer,
wherein the ion-conductive substance layer has a property which allows two-or three-dimensional movement of the cations, and
the cations are movable via the ion-conductive substance layer and the conductive carbon layer.

The percentage represented by the term "at least part" used in the phrase "ion-conductive substance layer present on at least part of the surface of the primary particles" is preferably 50 % or more of the entire surface of individual primary particles. When the layer covers 50 % or more of the surface of the primary particles, the layer is preferably spread on the surface of the primary particles uniformly.
According to this aspect, almost the same effects as those of the first aspect can be attained.
An electrode material for secondary battery according to a third aspect of the present invention includes:

crystal primary particles of an electrode active material which releases or absorbs cations of a monovalent or divalent metal when subjected to electrochemical oxidation or reduction and which has a crystal lattice in which the cations can move only in one-dimensional allowable movement direction during the process of oxidation or reduction;
an ion-conductive substance layer present on at least part of the surface of  the primary particles; and
a conductive carbon layer formed by pyrolysis of a carbon precursor and present on at least part of the surface of at least the ion-conductive substance layer,
wherein the ion-conductive substance layer has a property which allows two-or three-dimensional movement of the cations,
the conductive carbon layer has passage holes which allow passage of the cations in the thickness direction of the conductive carbon layer, and
end faces of the primary particles across the allowable movement direction of the cations and the passage holes of the conductive carbon layer are connected via the ion-conductive substance layer.

The expression "an ion-conductive substance layer present on at least part of the surface of the primary particles" used herein means both a case where the ion-conductive substance layer covers the entire surface of the primary particles and a case where the ion-conductive substance layer covers not the entire surface but only part of the surface of the primary particles.

The expression "at least the ion-conductive substance layer" in the phrase "a conductive carbon layer present on at least part of the surface of at least the ion-conductive substance layer" used herein means a configuration in which the conductive carbon layer is also present on the surface of the electrode active material on which the ion-conductive substance layer is not present in addition to a configuration in which the conductive carbon is present only on the surface of the ion-conductive substance layer.

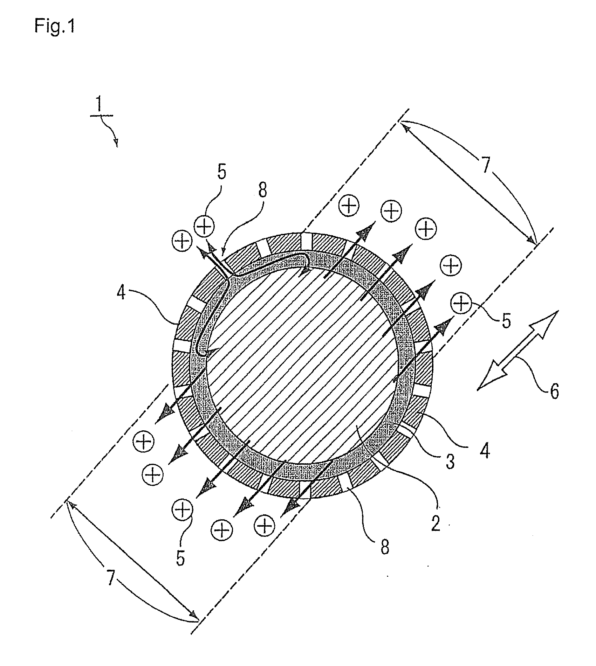

One example of the electrode material for a secondary battery according to this aspect is described with reference to FIG. 1. An electrode material (reference numeral 1) for a secondary battery shown in FIG. 1 has primary particles of an electrode active material (reference numeral 2), an ion-conductive substance layer (reference numeral 3) covering the surface of the primary particles of the electrode active material, and a conductive carbon layer (reference numeral 4) further covering the ion-conductive substance layer.

The electrode active material 2 releases or absorbs cations of a monovalent or divalent metal when subjected to electrochemical oxidation or reduction, and has a crystal structure in which the cations can move only in one-dimensional movable direction (reference numeral 6) in the crystal lattice during the process of oxidation or reduction. In other words, the cations are released from or absorbed into the electrode active material through only two end faces (reference numeral 7) thereof across the movable direction of the cations.

The ion-conductive substance layer is provided to cover the surface of the primary particles of the electrode active material. The ion-conductive substance layer has sufficient ion conductivity for the cations for charge and discharge of the electrode active material. The ion-conductive substance layer also has a property which allows two- or three-dimensional movement of the cations.

Because the ion-conductive substance layer covers the end faces of the primary particles across the movable direction of the cations, the cations released through the end faces are taken into the ion-conductive substance layer and can make two- or three-dimensional internal movement in the ion-conductive substance layer. As a result, the cations can be released from any part of the surface of the ion-conductive substance layer.

The conductive carbon layer covering the ion-conductive substance layer has sufficient electrical conductivity for charge and discharge of the electrode active material, and has passage holes which allows passage of the cations in the thickness direction of the conductive carbon layer. Because the cations released through the end faces move freely in the ion-conductive substance layer as described above, the cations taken into the ion-conductive substance layer can reach the passage holes. Then, the cations are released through the passage holes, and an ion conduction path is created between the electrode material and an external electrolyte (electrolytic solution, solid electrolyte or the like) in contact with the electrode material. The absorption of the cations by the electrode active material takes place through the migration route opposite to that which the cations follow during the release process.

As described above, according to this aspect, good electron conductivity is provided by the conductive carbon layer, and ion conductivity for the cations is improved because a migration route for cations is established. This allows easy passage of lithium ions between the inside and the outside of the primary particles of the electrode active material during charge and discharge when the electrode material is used in a secondary battery, resulting in improvement of the charge-discharge utilization rate and the rate characteristics of the electrode active material.

It should be noted that while the ion-conductive substance layer 3 covers the entire surface of the primary particles of the electrode active material 2 in FIG. 1, the surface of the primary particles of the electrode active material 2 except the end faces 7 may not necessarily be completely covered with the ion-conductive substance layer 3. An ion conduction path is formed between an external electrolyte (electrolytic solution, solid electrolyte or the like) and the electrode material 1 and the charge and discharge utilization rate and rate characteristics of the electrode active material 2 are improved as long as at least part of the end faces 7 of the primary particles of the electrode active material 2 across the movable direction 6 of the cations 5 are covered with the ion-conductive substance layer 3 and the end faces 7 and the passage holes 8 of the conductive carbon layer 4 are connected via the ion-conductive substance layer 3 so that the cations 5 can move in the ion-conductive substance layer 3 and pass through the passage holes 8 in the close vicinity of the end faces 7.

The part which is not covered with the ion-conductive substance layer 3 may be directly covered with the conductive carbon layer 4.

In other words, what is necessary is that the electrode material includes: an ion-conductive substance layer 3 present on at least part of the surface of the primary particles of the electrode active material 2 and a conductive carbon layer 4 formed by pyrolysis of a carbon precursor and present on at least part of the surface of at least the ion-conductive substance layer 3, and the ion conduction path is formed in the electrode material.

An electrode material for a secondary battery according to a fourth aspect of the present invention is the electrode material for a secondary battery according to any one of the first to third aspects,
wherein the electrode active material is a substance represented by the general formula $AMDO_4$,

in the general formula $AMDO_4$,
A is a cation and one or a combination of two or more of Li, Na and Mg,
M is one or a combination of two or more of Fe, Mn, Co and Ni, or contains one or a combination of two or more of Fe, Mn, Co and Ni and one or a combination of two or more of Mg, Ca, Sc, Ti, Zr, V, Nb, Cr, Mo, W, Cu, Zn, Al, Ga, In and Sn,
D is P, or a combination of P and one or two or more of Al, Si, S, V and Mo, and
electro-neutrality is maintained in the $AMDO_4$ as a whole.

One example of the substance represented by the general formula $AMDO_4$ is an electrode material having an olivine-type crystal structure (orthorhombic system, space group Pnma) represented by the general formula $Li_aMPO_4$ (wherein a is a positive number not greater than 1) including $LiMPO_4$. The M in the general formula is a transition metal, such as iron, manganese, cobalt or nickel, or a combination of two or more thereof.

In addition to $Li_aMPO_4$, an electrode active material containing as a major component a crystalline compound having the above olivine-type crystal structure and represented by the general formula $A_aM'_{1-x}M''_xP_{1-y}Y_yO_4$, for example, can be used as the substance represented by the general formula $AMDO_4$. In the general formula, A is a cation and one or a combination of two or more of Li, Na and Mg. The M in the general formula $AMDO_4$ may be $M'_{1-x}M''_x$, wherein M' is one or a combination of two or more of Fe, Mn, Co and Ni and M'' is one or a combination of two or more of Mg, Ca, Sc, Ti, Zr, V, Nb, Cr, Mo, W, Cu, Zn, Al, Ga, In and Sn.

The D in general formula, $AMDO_4$ may consists of P (phosphorus) and Y, which is described later. The Y is one or a combination of two or more of Al, Si, S, V and Mo, x and y are not smaller than 0 and not greater than 0.4 with one of them being not equal to 0, and a is a positive number not greater than 1 and selected so that the compound can maintain electro-neutrality.

In one example of desirable aspects, the electrode active material contains as a major component a compound having an Li ion as the cation and represented by the general formula $Li_a(Fe_{1-x-z}Mn_z)M''_xPO_4$ (wherein z is a number not smaller than 0 and not greater than 1-x) selected from among crystalline compounds represented by the general formula $A_aM'_{1-x}M''_xP_{1-y}Y_yO_4$.

According to this aspect, because the electrode material containing an electrode active material $AMDO_4$ as described above is provided with good ion conductivity by the ion-conductive substance layer, the electrode material can provide excellent charge and discharge utilization rate and rate characteristics as an electrode material for a secondary battery.

An electrode material for a secondary battery according to a fifth aspect of the present invention is the electrode material for a secondary battery according to the fourth aspect, wherein the ion-conductive substance layer comprises a layer of an oxo acid salt containing A and D in the $AMDO_4$ and at least has an ion conductive function for the cations.

One preferred example of the ion-conductive substance layer in this aspect is a layer of an oxo acid salt containing A and D, and the layer maintains the ion conductive function for the cations and the M contained in the layer imparts electrical conductivity (electron conductivity) to the layer. In many cases, the M is contained to substitute for part of the A in the ion-conductive substance layer.

The ion-conductive substance layer containing the A and D, or the A, D and M is preferably in an amorphous state at least partially.

For example, when the electrode active material $AMDO_4$ is $LiFePO_4$ having an olivine-type structure, one preferred example of the ion conductive layer substance layer contains $Li_4P_2O_7$ or $Li_3PO_4$ or a compound having an intermediate composition between $Li_4P_2O_7$ and $Li_3PO_4$ as a (poly)phosphate containing the A and D in the general formula $AMDO_4$.

Also, in a preferred aspect, divalent and/or trivalent Fe contained as the M in the ion-conductive substance layer to maintain an ion conductive function for the cations (Li, in this case) and impart electrical conductivity (electron conductivity) thereto is contained to substitute for part of Li in $Li_4P_2O_7$ or $Li_3PO_4$ or a compound having an intermediate composition between $Li_4P_2O_7$ and $Li_3PO_4$. Specifically, the ion conductive layer substance layer contains at least one of the compounds having the following compositions, for example:

$Li_{3-2x}Fe(II)_xPO_4$, $Li_{2-2x}Fe(II)_xP_2O_7$, $Li_{3-3x}Fe(III)_xPO_4$, $Li_{2-3x}Fe(III)_xP_2O_7$, $Li_{9-4x}Fe(II)_{2x}(PO_4)_3$, and $Li_{9-6x}Fe(III)_{2x}$

$(PO_4)_3$.

In the above formulae, x is a positive number not greater than 1, preferably not greater than approximately 0.3, and the coefficient of Li is a positive number. The ion-conductive substance layer is preferably in an amorphous state at least partially.

According to this aspect, the electrode material of the fourth aspect has suitable ion conductivity. In addition, in a preferred aspect in which the M is also contained in the electrode material, the ion-conductive substance layer has good ion conductivity and electrical conductivity (electron conductivity). Because of these effects, excellent charge and discharge utilization rate and rate characteristics for an electrode material for a secondary battery can be attained.

An electrode material for a secondary battery according to a sixth aspect of the present invention is the electrode material for a secondary battery according to any one of the first to fifth aspects, wherein the ion-conductive substance forming the ion-conductive substance layer is

(A) one selected from the group consisting of oxides, sulfides, phosphates and silicates containing cations of a monovalent or divalent metal and nitrides thereof, or
(B) a composite of two or more substances selected from the group (A).

According to this aspect, in addition to effects similar to those of any one of the first to fifth aspects, electron conductivity and lithium ion conductivity sufficient for an electrode material for a secondary battery can be achieved using (A) one selected from the group consisting of oxides, sulfides, phosphates and silicate containing the same cations as cation 5 of a monovalent or divalent metal (FIG. 1)and nitrides thereof, or (B) a composite of two or more of the substances selected from the group (A) as an ion-conductive substance.

An electrode material for a secondary battery according to a seventh aspect of the present invention is the electrode material for a secondary battery according to any one of the first to sixth aspects, wherein the ion-conductive substance layer has an amorphous structure in at least a portion thereof.

According to this aspect, there can be obtained the following effects in addition to effects similar to those of any one of the first to sixth aspects. Because the ion-conductive substance layer has an amorphous structure in at least a portion thereof, the adhesion between the ion-conductive substance layer and the electrode active material particles increases. In addition, because a substance having an amorphous structure is usually isotropic in terms of ion diffusion, three-dimensional ion conductivity for the cations can be imparted to the ion-conductive substance layer.

An electrode material for a secondary battery according to an eighth aspect of the present invention is the electrode material for a secondary battery according to any one of the first to seventh aspects, wherein the ratio between the molar distribution rate of the cations in the electrode active material and the molar distribution rate of the cations in the ion-conductive substance is in the range of the formula (1) below:

[Mathematical formula 1]

$$0.01 \leq (\text{Molar distribution rate of cations in ion-conductive substance})/(\text{Molar distribution rate of cations in electrode active material}) \leq 0.2 \ (1)$$

The term "molar distribution rate of cations in ion-conductive substance" as the numerator of the above formula refers to the rate of the total number of moles of the cations contained in the ion-conductive substance forming the ion-conductive substance layer to the total number of moles of the cations contained in the positive electrode material composed of the electrode active material covered with the conductive carbon layer and the ion-conductive substance layer. The term "molar distribution rate of cations in the electrode active material" as the denominator of the above formula refers to the rate of the total number of moles of the cations contained in the electrode active material to the total number of moles of the cations contained in the positive electrode material.

According to this aspect, sufficient ion conductivity can be imparted to the ion-conductive substance layer by making the ratio between the molar distribution rate of the cations in the electrode active material and the molar distribution rate of the cations in the ion-conductive substance equal to or higher than 0.01. When the ratio is higher than 0.2, there is a possibility that the amount of the cations in the electrode active material is so small that the charge-discharge capacity decreases. By adjusting the ratio to be equal to or smaller than 0.2, an electrode active material having excellent charge-discharge characteristics for an electrode material for a secondary battery can be achieved.

An electrode material for a secondary battery according to a ninth aspect of the present invention is the electrode material for a secondary battery according to any one of the first to eighth aspects, wherein at least portions of the ion-conductive substance layer are intruded into the passage holes of the conductive carbon layer.

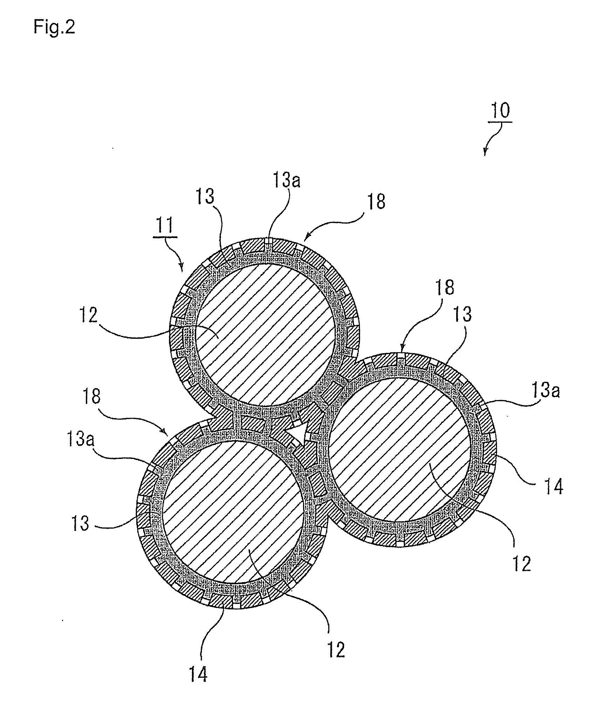

According to this aspect, because at least portions (reference numeral 13a) of the ion-conductive substance layer are intruded into the passage holes of the conductive carbon layer as shown in FIG. 2, sufficient ion conductivity for the cations can be obtained more effectively.

An electrode material for a secondary battery according to a tenth aspect of the present invention is the electrode material for a secondary battery according to any one of the first to ninth aspects, wherein a plurality of the primary particles are bound via at least part of the ion-conductive substance and/or the conductive carbon layer to form secondary particles.

According to this aspect, when the electrode material for a secondary battery is used in a secondary battery, the electrode material can have sufficient electron conductivity and ion conductivity for charge and discharge of the secondary battery.

A secondary battery according to an eleventh aspect of the present invention contains the electrode material for a secondary battery according to any one of Claims 1 to 10 as a constituent member of a positive electrode or negative electrode.

For example, while lithium iron phosphate, shown as an example of an electrode active material in which cations can move only in a one-dimensional movable direction, is usually used as a positive electrode active material, an example in which another electrode active material having a higher oxidation reduction potential than lithium iron phosphate (such as lithium cobaltate ($LiCoO_2$) or the like) is used as a positive electrode active material and lithium iron phosphate ($Li_xFePO_4$) is used as a negative electrode active material is disclosed in Japanese Patent No. 3906944 (a "gel electrolyte" is used as the electrolyte). In such a case, when lithium iron phosphate covered with an ion-conductive substance layer and a conductive carbon layer as described above is used as the negative electrode material, the charge and discharge utilization rate and rate characteristics can be improved. In addition, the application to negative electrode material can have the same characteristic improvement effect on any negative electrode active material in which cations can move only in a one-dimensional movable direction in addition to lithium iron phosphate.

According to this aspect, because effects similar to those of any one of the first to tenth aspects can be attained, a secondary battery having excellent battery performance can be provided.

A method for producing an electrode material for a secondary battery according to a twelfth aspect of the present invention is

a method for producing an electrode material for a secondary battery having an conductive carbon layer, including: obtaining an electrode active material represented by the general formula $AMDO_4$ by subjecting a calcination precursor containing an ingredient as an A source, an ingredient as an M source and an ingredient as a D source to primary calcination; and subjecting the electrode active material together with a carbon precursor which forms conductive carbon when pyrolyzed to secondary calcination,

in the general formula $AMDO_4$,
A is a cation and one or a combination of two or more of Li, Na and Mg,
M is one or a combination of two or more of Fe, Mn, Co and Ni, or contains one or a combination of two or more of Fe, Mn, Co and Ni and one or a combination of two or more af Mg, Ca, Sc, Ti, Zr, V, Nb, Cr, Mo, W, Cu, Zn, Al, Ga, In and Sn,
D is P, or a combination of P and one or two or more of Al, Si, S, V and Mo, and
electro-neutrality is maintained in the $AMDO_4$ as a whole,

the method including at least one of the steps of:
a first step, which is performed as a pretreatment before the primary calcination, of regulating at least one of the coexisting water amount in the ingredient mixture and the target grain size of the ingredient mixture; and
a second step of oxidizing the calcination precursor and/or the intermediate product after the primary calcination in at least one of the stage of the primary calcination and the stages before and after the primary calcination.

The term "intermediate product after primary calcination" used herein means a processed material in the course of primary calcination in addition to a processed material after primary calcination and before secondary calcination.

The expression "regulate the amount of coexisting water" means adding water from a gas phase or liquid phase to the ingredient mixture so that the amount of water contained in the ingredient mixture can be in a predetermined concentration range. The amount of water is preferably in the range of 0.1 to 25 % by mass of the ingredient mixture.

The expression "regulate the target grain size of the ingredient mixture" means adjusting the particle size of the ingredient mixture by wet or dry grinding, preferably to an average particle size in the range of 0.5 to 10 $\mu$m.

By controlling a set of production conditions, including atmosphere exposure conditions or air introduction conditions, in the first step of controlling at least one of the coexisting water amount in the ingredient mixture and the target grain size of the ingredient mixture in pretreatment steps, such as grinding and mixing, before the primary calcination and the second step of oxidizing the calcination precursor and/or the intermediate product after the primary calcination is in at least one of the stage of the primary calcination and the stages before and after the primary calcination, an ion-conductive substance layer having an ion conductive function for the cations can be obtained together with the electrode active material intended in the fourth aspect.

At this time, an oxide of M, which is described later, (or M in a metallic state) or an M(III) chemical species is formed during a series of steps described above, and A and phosphate ions derived from D in the total ingredients becomes stoichiometrically excessive relative to the M as a result of the formation of oxide or chemical species. Then, the ion-conductive substance layer is formed from the excessive A and phosphate ions.

According to this aspect, an electrode material for a secondary battery including an electrode active material having an ion-conductive substance layer as described in the fourth aspect can be produced. In addition, because the cations of M, which is described later, are diffusively transferred into the ion-conductive substance layer during the calcination, an electrode material for a secondary battery including an electrode active material having an ion-conductive substance layer also having electron conductivity can be also produced.

At this time, because the electrode active material and the ion-conductive substance layer can be simultaneously synthesized from the ingredient mixture of an ingredient as an A source, an ingredient as an M source and an ingredient as a D source, an electrode active material having an ion-conductive substance layer on the surface thereof can be obtained. For this reason, an electrode active material having an intended ion-conductive substance layer can be synthesized from an ingredient mixture of a lithium (Li) source compound, a phosphoric acid source compound and an Fe source compound mixed at a stoichiometric ratio or a ratio close thereto to produce the electrode material can be produced. In addition, the electrode material also has the features of the sixth, seventh and tenth aspects as described before.

A method for producing an electrode material for a secondary battery according to a thirteenth aspect of the present invention is

a method for producing an electrode material for a secondary battery having an conductive carbon layer, the method including: obtaining an electrode active material represented by the general formula $AMDO_4$ by subjecting a calcination precursor containing an ingredient as an A source, an ingredient as an M source and an ingredient as a D source to primary calcination; and subjecting the electrode active material together with a carbon precursor which forms conductive carbon when pyrolyzed to secondary calcination,

in the general formula $AMDO_4$,
A is a cation and one or a combination of two or more of Li, Na and Mg,
M is one or a combination of two or more of Fe, Mn, Co and Ni, or contains one or a combination of two or more of Fe, Mn, Co and Ni and one or a combination of two or more of Mg, Ca, Sc, Ti, Zr, V, Nb, Cr, Mo, W, Cu, Zn, Al, Ga, In and Sn,
D is P, or a combination of P and one or two or more of Al, Si, S, V and Mo, and
electro-neutrality is maintained in the $AMDO_4$ as a whole,

wherein the ingredients are mixed at such a ratio that A and D are stoichiometrically excessive relative to M as compared to those in a theoretical composition of the electrode active material represented by the general formula $AMDO_4$, an ingredient mixture having the excessive composition is calcined to form an electrode active material having an ion-conductive substance layer on at least part of the surface thereof in the primary calcination, and the electrode active material is then subjected to secondary calcination together with the carbon precursor.

According to this aspect, because an ion-conductive substance layer can be formed on at least part of the surface of the electrode active material by calcining an ingredient mixture having an excessive composition as described above, an electrode material for a secondary battery composed of the electrode active material described in the fourth aspect and having an ion conductive function can be produced. In addition, because the M is diffusively transferred from the active material $AMDO_4$ into the ion-conductive substance layer in many cases also in this aspect as in the case of the twelfth aspect, the ion-conductive substance layer can also provide electron conductivity by the effect of the transfer. In addition, the electrode material also has the features of the sixth, seventh and tenth aspects as described before.

A method for producing an electrode material for a secondary battery according to a fourteenth aspect of the present invention is

a method for producing an electrode material for a secondary battery,
the method including: subjecting a mixture of an electrode active material represented by the general formula $AMDO_4$,

wherein A is a cation and one or a combination of two or more of Li, Na and Mg,
M is one or a combination of two or more of Fe, Mn, Co and Ni, or contains one or a combination of two or more of Fe, Mn, Co and Ni and one or a combination of two or more of Mg, Ca, Sc, Ti, Zr, V, Nb, Cr, Mo, W, Cu, Zn, Al, Ga, In and Sn,
D is P, or a combination of P and one or two or more of Al, Si, S, V and Mo, and
electro-neutrality is maintained in the $AMDO_4$ as a whole, and

a mixture of ingredients of an ion-conductive substance layer to primary calcination; and

subjecting a mixture of the primary calcination product and a carbon precursor which forms conductive carbon when pyrolyzed to secondary calcination.

According to this aspect, almost the same effects as those of the thirteenth aspect can be attained.

A method for producing an electrode material for a secondary battery according to a fifteenth aspect of the present invention is

a method for producing an electrode material for a secondary battery,

the method including: calcining a calcination precursor obtained by mixing:

an electrode active material represented by the general formula $AMDO_4$,

wherein A is a cation and one or a combination of two or more of Li, Na and Mg,

M is one or a combination of two or more of Fe, Mn, Co and Ni, or contains one or a combination of two or more of Fe, Mn, Co and Ni and one or a combination of two or more of Mg, Ca, Sc, Ti, Zr, V, Nb, Cr, Mo, W, Cu, Zn, Al, Ga, In and Sn,

D is P, or a combination of P and one or two or more of Al, Si, S, V and Mo, and

electro-neutrality is maintained in the $AMDO_4$ as a whole;

a mixture of ingredients of an ion-conductive substance layer to primary calcination; and

a carbon precursor which forms conductive carbon when pyrolyzed.

According to this aspect, an ion-conductive substance layer and a conductive carbon layer can be simultaneously formed on the surface of the electrode active material by calcining a calcination precursor containing an electrode active material represented by the general formula $AMDO_4$, a mixture of ingredients of the ion-conductive substance layer and a carbon precursor which forms conductive carbon when pyrolyzed. According to this aspect, the intrusion structure between the ion-conductive substance layer and the conductive carbon layer can be formed easily by the simultaneous formation in addition to the effect of the fourteenth aspect, whereby an electrode material for a secondary battery also having the intrusion structure as described in the ninth aspect can be produced.

When the fourteenth aspect and the fifteenth aspect are compared, high-performance electrode material is likely to be obtained in the latter case.

A method for producing an electrode material for a secondary battery according to a sixteenth aspect of the present invention is the method according to any one of the twelfth to fourteenth aspects, characterized in that a carbon precursor which generates a gas is used to form the passage holes in the secondary calcination.

According to this aspect, because a conductive carbon layer having passage holes can be formed by the gas generated from the carbon precursor during the secondary calcination, an electrode material for a secondary battery described in the fourth aspect can be produced.

In the thirteenth to sixteenth aspects, the mixing ratio the ingredients is adjusted so that the amount of cation A can satisfy the formula (1) shown in the eighth aspect in the expected composition of the ion-conductive substance layer.

**Brief Description of Drawings**

FIG. 1 is an outline drawing illustrating an example of the configuration of primary particles of an electrode material for a secondary battery according to the present invention.

FIG. 2 is an outline drawing illustrating an example of the configuration of secondary particles of an electrode material for a secondary battery according to the present invention.

FIG. 3 is a schematic diagram illustrating the crystal structure of a one-dimensional ion-conductive olivine-type electrode material (such as $LiFePO_4$).

FIG. 4 shows a result of powder X-ray diffraction performed on the positive electrode material of Example 1.

FIG. 5 shows a result of powder X-ray diffraction performed on the positive electrode material of Comparative Example 1.

FIG. 6 shows a result of a discharge rate characteristics test conducted to evaluate the charge-discharge characteristics of a coin battery fabricated using the positive electrode material of Example 1.

FIG. 7 shows a result of a discharge rate characteristics test conducted to evaluate the charge-discharge characteristics of a coin battery fabricated using the positive electrode material of Comparative Example 1.

FIG. 8 is a graph showing results of X-ray diffraction in Example 2 and Reference Example 1.

FIG. 9 is a graph showing the constant-current discharge rate characteristics of Example 2.

FIG. 10 is a graph showing the constant-current discharge rate characteristics of Reference Example 1.

FIG. 11 is a graph showing a result of X-ray diffraction performed on the positive electrode material of Example 3.

FIG. 12 is a graph showing the constant-current discharge rate characteristics of Example 3.

FIG. 13 is a graph showing the constant-current discharge rate characteristics of Reference Example 2.

**Mode for Carrying out the Invention**

Description is hereinafter made of the present invention based on examples. It should be noted that the present invention is not limited by the description of the examples.

<Electrode active material>

As an electrode active material in an electrode material for a secondary battery according to the present invention, an electrode active material having crystal primary particles which release or absorb cations of a monovalent or divalent metal when subjected to electrochemical oxidization or reduction and have a crystal structure in which the cations can move in a one-dimensional movable direction in the crystal lattice during the process of oxidation/reduction is used. As the cations, Li, Na and Mg, for example, are used.

One example of the electrode active material is an electrode material having an olivine-type crystal structure (orthorhombic system, space group Pnma) represented by the general formula $Li_aMPO_4$ (wherein a is a positive number not greater than 1) including $LiMPO_4$. The M in the general formula is a transition metal, such as iron, manganese, cobalt or nickel, or a combination of two or more thereof.

In addition to $Li_aMPO_4$, an electrode active material containing as a major component a crystalline compound having the above olivine-type crystal structure and represented by the general formula $A_aM'_{1-x}M''_xP_{1-y}Y_yO_4$, for example, can be used. In the formula, A is a cation and is one or a combination of two or more of Li, Na and Mg, M' is one or a combination of two or more of Fe, Mn, Co and Ni, M'' is one or a combination of two or more of Mg, Ca, Sc, Ti, Zr, V, Nb, Cr, Mo, W, Cu, Zn, Al, Ga, In and Sn, Y is one or a combination of two or more of Al, Si, S, V and Mo, x and y are not smaller than 0 and not greater than 0.4 with one of them being not equal to 0, and a is a positive number not greater than 1 and selected so that the compound can maintain electro-neutrality.

In one example of desirable aspects, the electrode active material contains as a major component a compound having an Li ion as the cation and represented by the general formula $Li_a(Fe_{1-x-z}Mn_z)M''_xPO_4$ (wherein z is a number not smaller than 0 and not greater than 1-x) selected from among crystalline compounds represented by the general formula $A_aM'_{1-x}M''_xP_{1-y}Y_yO_4$.

The primary particles of the compound represented by the general formula $Li_a(Fe_{1-x-z}Mn_z)M''_xPO_4$ preferably has an average diameter in the movable direction of Li ions of not smaller than approximately 20 nm and not greater than approximately 300 nm. In particular, when the value of z/(1-x) is not smaller than 0.8, the average diameter is preferably not smaller than approximately 20 nm and not greater than approximately 70 nm.

The electrode active material can be synthesized based on a known method, such as a wet process, a solid phase calcination process, or a process in which a reaction intermediate obtained by wet synthesis is subjected to solid phase calcination (so-called sol-gel process, for example), and its production method is not specifically limited. For example, a method for producing an electrode active material equivalent to $LiMPO_4$ or $LiM'_{1-x}M''_xPO_4$ having an olivine-type crystal structure (wherein M' is Fe, Co, Ni, Mn or the like or any combination thereof, M'' is a transition metal or typical metal element substituted for M, and x is a positive number smaller than 1) or an electrode material containing the electrode active material is disclosed in official gazettes of JP-A-2002-151082 (wet process), JP-A-2004-095385 (wet process), JP-A-2007-119304 (wet process), JP-A-Hei 9-134724 (solid phase calcination process), JP-A-2004-63386 (solid phase calcination process), JP-A-2003-157845 (sol-gel process) and so on.

<Ion-conductive substance layer>

An ion-conductive substance used in an ion-conductive substance layer has a property which allows two- or three-dimensional internal movement of the cations. Preferably, the ion-conductive substance also has electron conductivity. More preferably, the ion-conductive substance layer has an ion conductivity equivalent to $10^{-8}$ S/cm or higher based on diffusive movement of the cations and an electrical conductivity (electron conductivity) of $10^{-8}$ S/cm or higher based on electron conduction. Even more preferably, the ion-conductive substance layer has an ion conductivity equivalent to $10^{-6}$ S/cm or higher and an electrical conductivity (electron conductivity) equivalent to $10^{-6}$ S/cm or higher.

As the ion-conductive substance, one selected from the group consisting of oxides, sulfides, phosphates and silicates containing a monovalent or divalent metal cation and nitrides thereof, or a composite of two or more substances selected from the above group, for example, can be used. The "phosphates" and "silicates" herein includes polyphosphates and polysilicates, which are condensation products of two or more of orthophosphate ions and orthosilicate ions, respectively.

In addition, the use of a cation-containing oxo acid salt or composite oxide containing the cation 5 and having an amorphous structure in at least a portion thereof as the ion-conductive substance layer is especially preferred. The cation-containing oxo acid salt or composite oxide preferably contains any one or more elements selected from Fe, Mn, Mg, Ca, Sc, La, Ti, Zr, V, Nb, Cr, Mo, W, Cu, Zn, Al, Ga, Ge, In, Sn, P, Al, Si, S and N.

Specifically, when the cation is a lithium ion, for example, examples of the lithium ion-conductive substance applicable to the ion-conductive substance layer of the present invention include substances having the following fundamental composition and composite compounds of two or more thereof (in the following, x and y are positive numbers not greater than 1):

[Oxide, silicate and phosphate compounds]

$Li_2TiO_3$, $Li_4Ti_5O_{12}$, $Li_2ZrO_3$, $LiVO_3$,
$LiNbO_3$, $Li_2CrO_4$, $Li_2MoO_4$, $Li_2WO_4$,
$LiAlO_2$, $Li_4Al_2O_5$, $LiGaO_2$, $LiInO_2$,
$Li_2SiO_3$, $Li_2Si_2O_5$, $Li_2GeO_3$,
$Li_2SnO_3$, $Li_3PO_4$, $Li_4P_2O_7$, $Li_{14}Zn(GeO_4)_4$,
$Li_3V_2(PO_4)_3$, $LaLiTi_2O_6$, Li-ß-alumina, etc.

[Sulfide and nitride compounds]

$Li_{4-x}Si_{1-x}P_xS_4$, $Li_{4-x}Ge_{1-x}P_xS_4$,
$Li_{4-x}Ge_{1-x}Ga_xS_4$, $Li_{3+5x}P_{1-x}S_4$,
$Li_{3+x}PO_{4-x}N_x$, $(Li_2S)_x(SiS_2)_{1-x}$,
$(Li_2S)_x(SiS_2)_y(Li_3PO_4)_{1-x-y}$, etc.

These compounds have a lithium ion conductivity of approximately $10^{-8}$ S/cm or higher (some have a lithium ion conductivity of approximately $10^{-6}$ S/cm or higher) and two or more dimensional degree of freedom for lithium ion conduction at normal temperature when in a crystalline or amorphous state. When the lithium ion-conductive substance layer has an amorphous structure in at least a portion thereof as described above as a desirable aspect, the adhesion between the lithium ion-conductive substance layer and the primary particles of the electrode active material is improved and the lithium ion-conductive substance layer exhibits three-dimensional lithium ion conductivity as a whole.

Lithium ion-conductive substances containing a transition metal element as a constituent element among the crystalline or at least partially amorphous lithium ion-conductive substances generally have a relatively high electrical conductivity (electron conductivity). When a substance having both lithium ion conductivity and electrical conductivity as described above is used as the lithium ion-conductive substance layer, the substance layer functions not only as a conduction path for lithium ions but also as an electro- conduction path between an conductive carbon layer, which is described later, and the primary particles of the electrode active material, and, consequently, the polarization during charge and discharge can be reduced in the entire electrode material. The lithium ion-conductive substance layer used in the present invention preferably has an electrical conductivity (electron conductivity) of approximately $10^{-8}$ S/cm or higher, more preferably approximately $10^{-6}$ S/cm or higher, at normal temperature.

In general, a crystalline or at least partially amorphous substance obtained by substituting some of lithium ions in a substance having two or more dimensional lithium ion conductivity for ions of one or a combination of two or more of transition metal elements, such as Fe, Co, Ni, Mn, Ti and V, has improved electrical conductivity (electron conductivity) in addition to improved ion conductivity and is therefore often advantageous as a lithium ion-conductive substance layer for use in the present invention.

As examples of (poly)phosphates partially substituted with Fe, Mn or V, examples of substances having the fundamental composition and composite compounds of two or more of the substances are listed below (in the following, x is a positive number not greater than 1, preferably not greater than approximately 0.3, and the coefficient af Li is a positive number):

$Li_{3-2x}Fe(II)_xPO_4$, $Li_{2-2x}Fe(II)_xP_2O_7$,
$Li_{3-3x}Fe(III)_xPO_4$, $Li_{2-3x}Fe(III)_xP_2O_7$,
$Li_{9-4x}Fe(II)_{2x}(PO_4)_3$, $Li_{9-6x}Fe(III)_{2x}(PO_4)_3$, etc.
$Li_{3-2x}Mn(II)_xPO_4$, $Li_{2-2x}Mn(II)_xP_2O_7$,
$Li_{3-3x}Mn(III)_xPO_4$, $Li_{2-3x}Mn(III)_xP_2O_7$,
$Li_{9-4x}Mn(II)_{2x}(PO_4)_3$,
$Li_{9-6x}Mn(III)_{2x}(PO_4)_3$, $Li_{9-4x}V(II)_{2x}(PO_4)_3$,
$Li_{9-6x}V(III)_{2x}(PO_4)_3$, etc.

It should be noted that the constituent element species and the compositional ratio of the above lithium ion-conductive substances are not necessarily limited to the above composition formulae and may be at least partially substituted or changed. In addition, some of the constituent elements O, P, Si, S, N, etc. may be stoichiometrically deficient or excessive (in particular, when at least a portion of the lithium ion-conductive substance has an amorphous structure, and so on).

While a case where a lithium (Li) ion is used as the cation is shown in the foregoing, a crystalline or at least partially amorphous ion-conductive substance layer having a similar composition depending on the valence of the ion (Li and Na is monovalent, and Mg is divalent) and having two or more dimensional ion conductivity can be provided even when an ion of sodium (Na), magnesium (Mg) or the like is used.

The ion-conductive substance layer has a layer thickness in the range of approximately 0.6 to 30 nm, preferably in the range of approximately 1 to 10 nm, and is appropriately designed and formed based on its degrees of ion conductivity and electron conductivity. The layer thickness can be visually confirmed by observation with a high-resolution transmission electron microscope or structure evaluation means having a comparable resolution, such as high-resolution energy dispersive X-ray analysis or electron energy-loss spectroscopy.

The cation-containing composite oxide can be formed from simple substances of constituent elements of the cation-containing composite oxide except oxygen, any of hydroxides, oxides, oxyhydroxides, nitrates, carbonates, carboxylates, alkoxides, oxyalkoxides, phenoxides or acetylacetone complexes containing at least one of the constituent elements or hydrates or anhydrides thereof, or a combination of these as ingredients by causing a wet reaction and a heating calcination reaction, or either a wet reaction or heating calcination reaction, among the ingredients.

In addition, an intended ion-conductive substance layer can be deposited on the surface of the primary particles of the electrode active material from one or more of the above ion-conductive substances, or oxides, sulfides, phosphates and silicates and nitrides thereof as precursors of the ion-conductive substances by a vapor deposition method, such as plasma sputtering, or so-called mechanochemistry (dry mechanical grinding and mixing involving high-energy deposition in a fine grinder, such as a planetary ball mill or beads mill, for example).

The ion-conductive substance layer may be formed on the surface of the electrode active material by mixing the ingredients of the ion-conductive substance into an electrode active material prepared in advance. When $LiFePO_4$ is synthesized as the electrode active material, for example, the ion-conductive substance layer can be also formed by forming the ion-conductive substance (for example, $Li_4P_2O_7$) from ingredients containing a lithium source and a phosphoric acid source excessively to a certain extent relative to an Fe source when the ingredients of the active material are calcined to form $LiFePO_4$.

Alternately, $LiFePO_4$ on which a layer of $Li_4P_2O_7$ or $Li_3PO_4$ having an amorphous structure in at least a portion thereof or a compound having a composition intermediate between $Li_4P_2O_7$ and $Li_3PO_4$ is deposited as an intended ion-conductive substance layer can be synthesized simultaneously with $LiFePO_4$ from an ingredient mixture of a lithium (Li) source compound, a phosphoric acid source compound and an Fe source compound mixed at a stoichiometric ratio or a ratio close thereto by calcination.

In this case, a small amount of ultra-fine impurity particles of iron oxide (or metal iron) and Fe(III) chemical species which are produced as by-products together with the intended electrode active material $LiFePO_4$ is purposefully generated by controlling a set of production conditions including conditions such as the amount of coexisting water in the ingredient mixture and the target grain size of the ingredient mixture in the step of grinding and mixing the ingredients at a stoichiometric ratio prior to the calcination and conditions under which the reaction intermediate product is exposed to atmosphere or air is introduced into the reaction intermediate product before, during and after the calcination step. In this process, the impurities are formed because of the formation of iron oxyhydroxide (III) resulting from moisture absorption and oxidation of the ingredient mixture, imperfect contact between the Fe and Li sources during primary calcination resulting from the degree of roughness and the degree of mixing and dispersion of the Fe and Li sources in the ingredient mixture, and so on. At this time, the amounts of Li and phosphate ions in the total ingredients become excessive as a result of the formation of the Fe oxide (or metal iron) as a by-product.

The Fe(III) chemical species is assumed to be either $LiFe(II)PO_4$, the same substance as the electrode active material, or $Fe(III)PO_4$, which is present as solid solution in the ion-conductive substance layer, which is described later, or both of $LiFe(II)PO_4$ and $Fe(III)PO_4$, and Li becomes further excessive as a result of the formation of the chemical species as a by-product. In addition, $Fe(III)PO_4$ present as solid solution in the ion-conductive substance layer itself functions as an ion-conductive substance.

For the above reasons, a layer of $Li_4P_2O_7$ or $Li_3PO_4$ having an amorphous structure in at least a portion thereof or a compound having a composition intermediate between $Li_4P_2O_7$ and $Li_3PO_4$ can be deposited as an intended ion-conductive substance layer from Li and phosphate ions which become excessive during these processes.

Among the by-products, the iron oxide is formed as a result of the formation of a hydroxide in the environment during the grinding and mixing of the ingredients of the electrode active material prior to the calcination and autopyrolysis of the Fe source compound during the calcination step resulting from insufficient grinding and mixing of the ingredients, is reduced, depending on the holding temperature during the calcination step, to $Fe_3O_4$ (lower than approximately 650°C: ferromagnetic substance), FeO (approximately 650 to 680°C: antiferromagnetic substance having a Neel temperature of approximately 198K, paramagnetic at room temperature) or metal iron (higher than approximately 680'C: ferromagnetic substance) by the conductive carbon layer, which is described later, during the calcination, and remains in the final product (FeO of the three substances is so unstable that it may be transformed to carbide).

The residual amounts of the iron oxide and metal iron can be obtained by measuring the saturation magnetization of the ferromagnetic and antiferromagnetic components at room temperature and a predetermined chilled temperature (50 to 200 K, for example) with a SQUID magnetic fluxmeter or the like.

The Fe(III) chemical species is formed as a result of air oxidation of the ingredient Fe(II) source, reaction intermediate Fe(II) species and final product $LiFePO_4$ during the process of grinding and mixing the ingredients of the electrode active material, during the step of calcining the ground ingredients, reaction intermediate or final product, and during the process of handling them in the atmosphere. The Fe(III) chemical species (usually paramagnetic at normal temperature) is reduced by the conductive carbon layer, which is described later, during the calcination step, and a portion of the Fe(III) chemical species is transformed into a phosphide (primarily $Fe_2P$: ferromagnetic substance having a Curie temperature of approximately 210 K and being paramagnetic at room temperature) at approximately 700 to 720°C or higher and remains in the final product.

The residual amounts of the Fe(III) chemical species and phosphide (primarily $Fe_2P$) can be obtained by Moessbauer spectroscopy at room temperature and a predetermined chilled temperature (a temperature close to the liquid nitrogen temperature 77 K, for example). The residual amount of $Fe_2P$ can be also obtained by powder X-ray diffraction measurement. For example, when a Cu-K$\alpha$-ray source is used as the X-ray source, the residual amount of $Fe_2P$ can be approximated by comparing the intensities of the diffraction peak of $Fe_2P$ at $2\theta$ = approximately 40.3 degrees and the main diffraction peak of the electrode active material $LiFePO_4$.

In these examples, it is assumed that a small amount of Fe(II) ions in the electrode active material $LiFePO_4$ is migrated into the ion-conductive substance layer ($Li_AP_2O_7$ or $Li_3PO_4$ having an amorphous structure in at least a portion thereof or a compound having a composition intermediate between $Li_4P_2O_7$ and $Li_3PO_4$) and substituted for a portion of Li by high-temperature diffusion during the calcination step, and imparts a certain degree of electron conductivity to the ion-conductive substance layer.

In addition, an ion-conductive substance layer similar to the above can be formed on other olivine-type electrode materials, such as $LiMPO_4$ in which M is other than Fe (M = Mn, Co or Ni), by controlling the production conditions in the same manner as described above. However, when M = Mn, Co or Ni, the formation of the M(III) chemical species and phosphide as by-products do not have to be taken into consideration because the divalent M source compound in the ingredients, the reaction intermediate and the final product do not undergo air oxidation and the M(III) chemical species and phosphide are therefore unlikely to be formed. In addition, electron conductivity can be imparted to the ion-conductive substance layer by diffusion of central transition metal from the electrode active material during calcination.

While a method for the formation of the ion conductive layer using a solid phase calcination process is described in the foregoing, such an ion-conductive substance layer can be formed by a wet process, such as a so-called hydrothermal synthesis method. In particular, a crystalline or amorphous lithium-containing phosphate compound, $Li_3PO_4$ or the like can be deposited as a by-product in a wet synthesis reaction step together with the electrode active material $LiFePO_4$ by, for example, slightly shifting the hydrogen ion concentration (pH) in the reaction solution to the alkaline side. The by-product is partially subjected to heat denaturation and sintered onto the surface of the primary particles of the electrode active material during the subsequent step of calcination involving deposition of a conductive carbon layer, and functions as the lithium ion conductive layer of the present invention.

Even in the case of other electrode active materials containing cations of Li, Na or Mg and having one-dimensional cation conductivity, an ion-conductive substance layer containing the cations can be formed simultaneously with the synthesis of the electrode active material in the same manner by mixing an excessive amount of a cation source and so on into the ingredients of the electrode active material and/or from excessive cations resulting from the formation of impurities as by-products from the ingredients of the electrode active material or the like. In addition, the electron conductivity of the ion-conductive substance layer can be increased by diffusing the constituent transition metal ions in the electrode active material into the ion-conductive substance layer and substituting the transition metal ions for some of the cations.

The ratio between the molar distribution rate of the cations in the electrode active material having one-dimensional cation conductivity as described above and the molar distribution rate of the cations in the ion-conductive substance is preferably in the range of the following formula (expressed in terms of the molar distribution rate of the cations).

[Mathematical Formula 1]

$$0.01 \leq (\text{Molar distribution rate of cations in ion-conductive substance})/(\text{Molar distribution rate of cations in electrode active material}) \leq 0.2 \ (1)$$

<Conductive carbon layer>

The conductive carbon layer can be formed from a carbon precursor which forms conductive carbon when pyrolyzed by mixing the carbon precursor and an electrode active material or ingredients or reaction intermediate thereof, and calcining the mixture in an atmosphere composed primarily of an inert gas.

Preferably, the conductive carbon layer has an electrical conductivity (electron conductivity) of $10^{-3}$ S/cm or higher. The conductive carbon layer has passage holes (designated by reference numeral 8 in FIG. 1) having a size that allows passage of the cations coordinated with at least one molecule of electrolytic solution solvent (approximately 7Å or greater). The passage holes may be in the form of "cracks" or "cleavages," in which case the width of the "cracks" or "cleavages" may be regarded as their size.

Examples of usable carbon precursors which form conductive carbon when pyrolyzed include bitumens such as tar and coal pitch, aromatic compounds and chain hydrocarbons and derivatives thereof, and saccharides such as dextrin and derivatives thereof which undergo pyrolysis from an at least partial molten state and form conductive carbon.

When the carbon precursor is highly volatile, the conductive carbon layer can be formed from an aromatic compound having an average molecular weight of approximately 200 or lower or a derivative thereof, a chain hydrocarbon (alkane, alkene or alkyne) having an average molecular weight of approximately 250 or lower or a derivative thereof, or carbon monoxide, for example, by carrying out the calcination while feeding or adding the carbon precursor, which has been preheated into a prevaporized state when necessary, to the electrode active material or the ingredients or reaction intermediate thereof.

Especially when such a highly-volatile carbon precursor is used, there is a possibility that the degree of deposition and carbonization from the carbon precursor significantly decreases or the conductive carbon layer cannot be successfully formed when the electrode active material does not have a catalytic ability to form pyrolytic carbon. Also, the use of a carbon precursor having a low volatility and a high degree of carbonization, such as bitumens including pitch, may lead to poor adhesion between the conductive carbon layer formed and the surface of the electrode active material, resulting in unfavorable results, such as poor charge-discharge cycle characteristics.

To avoid such problems, it is necessary to allow a substance having an ability to serve as a carbonization catalyst to coexist in the vicinity of the surface of the electrode active material. However, this is usually not easy. At this time, when the ion-conductive substance layer covering the surface of the electrode active material has the catalytic ability, the problem is solved very effectively.

In general, iron group metals (Fe, Co and Ni) and compounds thereof are substances known to have an ability to serve as a carbonization catalyst (for example, among the above electrode active materials, $LiFePO_4$ has the catalytic ability). Similarly, when the ion-conductive substance layer contains an iron group metal element as its constituent element, it effectively impart an ability to serve as a good carbonization catalyst to the ion-conductive substance layer and can therefore improve the degree of carbonization during the formation of the conductive carbon layer and the adhesion of the conductive carbon layer to the surface of the electrode active material. At the same time, the presence of an iron group metal element, which is a transition metal, is preferred because it improves the electrical conductivity (electron conductivity) of the ion-conductive substance layer as described above.

In the present invention, the conductive carbon layer has passage holes which allow passage of cations, such as Li ions, in the thickness direction of the conductive carbon layer. When a bitumen, such as tar or coal pitch, an aromatic compound or a derivative thereof, or a saccharide, such as dextrin, or a derivative thereof is used as the carbon precursor, the passage holes can be formed when the carbon precursor is pyrolyzed to form the conductive carbon layer. This is because structural defects of carbon occur due to either or both of the molecular shape or/and molecular weight of the carbon precursor.

It is believed that when the carbon precursor has a relatively high molecular weight (for example, an average molecular weight of approximately 700) (for example, when the carbon precursor is a pitch having a softening temperature of approximately 200 to 300°C), gaps tends to be created between the molecules and remain as the structural defects because the conductive carbon is not spread uniformly. In addition, distortion during the calcination may cause structural defects in the conductive carbon layer. When such a conductive carbon layer having many structural defects is formed, the conductive carbon layer preferably has a layer thickness of approximately 1 to 5 nm as observed with a high-resolution transmission electron microscope or a structure evaluation means having a comparable resolution, such as high-resolution energy dispersive X-ray analysis or electron energy-loss spectroscopy.

On the other hand, it is believed that when the carbon precursor has a relatively low molecular weight (for example, an average molecular weight of approximately 400) (for example, when the carbon precursor is a pitch having a softening temperature of approximately 100°C), a denser conductive carbon layer with less structural defects is formed because the carbon precursor, which has a lower molecular weight and therefore does not turn to liquid crystal, has a high degree of freedom of molecular motion and high fluidity when melted during the calcination. When such a dense conductive carbon layer is formed, the conductive carbon layer preferably has a layer thickness of approximately of 1 to 3 nm as observed under a high-resolution transmission electron microscope or a structure evaluation means having a comparable resolution as described above.

When a highly-volatile carbon precursor (such as tar having an average molecular weight or approximately 250 or lower, an aromatic hydrocarbon or a derivative thereof, a chain hydrocarbon (alkane, alkene or alkyne) having an average molecular weight or approximately 250 or lower or a derivative thereof, or carbon monoxide) is used, the passage holes are likely to be formed because the carbon precursor is gasified and the conductive carbon layer is perforated by the gas during the calcination.

The actual size (width) of the passage holes (or "cracks" or "cleavages") in the conductive carbon layer can be determined by observation with a field emission high-resolution scanning electron microscope, high-resolution transmission electron microscope, or a structure evaluation means having a comparable resolution as described above. Alternately, because the surface of the electrode active material generally has a high polarity whereas the surface of the conductive carbon layer has a low polarity, the degree of penetration (openness) of the passage holes in the conductive carbon layer can be determined with means for evaluation of the surface polarity of the electrode active material.

For example, the wettability of the surface of the electrode active material to a high-polar solvent (such as water, molten ethylene carbonate, propylene carbonate, N-methylpyrrolidone or dimethylsulfoxide) is higher as the degree of penetration (openness) and the number of the passage holes are greater. Thus, the degree of penetration (openness) of the passage holes can be relatively evaluated using general evaluation means used to evaluate the wettability (by evaluating the rate at which such a high-polar solvent is soaked up into a bed packed with the electrode material, for example). Alternatively, the polarity of the surface of the electrode active material can be evaluated and the degree of penetration (openness) of the passage holes can be therefore relatively evaluated by measuring the zeta potential of the surface of the electrode active material, for example.

The conductive carbon layer preferably covers at least 50 % or more, more preferably 80 % or more, of the outer peripheral contour of the primary particles of the electrode active material when observed under a high-resolution transmission electron microscope or the like from the perspective of the reduction of contact resistance between the primary particles.

<Primary particles of electrode material for secondary battery>

The primary particles of the electrode material for a secondary battery according to the present invention are next described based on drawings. FIG. 1 is an outline drawing illustrating the configuration of primary particles of an electrode material for a secondary battery according to the present invention. FIG. 2 is an outline drawing illustrating an example of the configuration of secondary particles of an electrode material for a secondary battery according to the present invention.

An electrode material 1 for a secondary battery shown in FIG. 1 has primary particles of an electrode active material 2, an ion-conductive substance layer 3 covering the surface of the primary particles of the electrode active material 2, and a conductive carbon layer 4 further covering the ion-conductive substance layer 3.

The electrode active material 2 has a crystal structure in which the cations 5 of a monovalent or divalent metal which the electrode active material 2 releases or absorbs when subjected to electrochemical oxidization or reduction can move only in a one-dimensional movable direction 6 in the crystal lattice. Thus, the cations 5 are released from or absorbed into the electrode active material 2 through only two end faces 7 thereof across the movable direction 6 of the cations 5.

The ion-conductive substance layer 3 is provided to cover a surface of each primary particle including at least part of the end faces 7 across the movable direction 6 of the cations 5. The ion-conductive substance layer 3 exhibits sufficient ion conductivity for the cations 5 for charge and discharge of the electrode active material as described above. The ion-conductive substance layer 3 preferably has electrical conductivity (electron conductivity) in addition to the ion conductivity. The ion-conductive substance layer 3 has a property which allows two- or three-dimensional movement of the cations 5.

Because the ion-conductive substance layer 3 covers at least part of the end faces 7, the cations 5 released through the end faces 7, for example, are taken into the ion-conductive substance layer 3 and can make two- or three-dimensional internal movement in the ion-conductive substance layer 3. As a result, the cations 5 can be released from any part of the surface of the ion-conductive substance layer 3.

The conductive carbon layer 4 covering the ion-conductive substance layer 3 has sufficient electrical conductivity for charge and discharge of the electrode active material 2, and has passage holes 8 which allows passage of the cations 5 in the thickness direction of the conductive carbon layer. Because the cations 5 released through the end faces 7 move freely in the ion-conductive substance layer 3 as described above, the cations 5 taken into the ion-conductive substance layer 3 can reach the passage holes 8.

Then, the cations 5 are released through the passage holes 8, and an ion conduction path is created between the electrode material 1 and an external electrolyte 9 (electrolytic solution, solid electrolyte or the like) in contact with the electrode material 1. The absorption of the cations 5 by the electrode active material 2 takes place through the migration route opposite to that which the cations 5 follow during the release process.

While the ion-conductive substance layer 3 covers the entire surface of the primary particles of the electrode active material 2 in FIG. 1, the ion-conductive substance layer 3 does not have to cover the entire surface of the primary particles as long as at least part of the surface of the electrode active material 2 including the end faces 7 of the primary particles of the electrode active material 2 across the movable direction 6 of the cations 5 is covered with the ion-conductive substance layer 3 and the end faces 7 connect to the passage holes 8 of the conductive carbon layer 4 via the ion-conductive substance layer 3.

Therefore, good electron conductivity is provided by the conductive carbon layer, and ion conductivity for the cations is improved because a migration route for the cations is established. This allows easy passage of lithium ions between the inside and the outside of the primary particles of the electrode active material during charge and discharge when the electrode material is used in a secondary battery, resulting in improvement of the charge-discharge utilization rate and the rate characteristics of the electrode active material 2.

In another preferred aspect, at least portions 13a of the ion-conductive substance layer 13 covering the primary particles of the electrode active material 12 are intruded into the passage holes 18 of the conductive carbon layer 14 as shown in FIG. 2. This ensures more effective provision of lithium ion conductivity and electrical conductivity (electron conductivity).

The present inventors found that the charge-discharge characteristics much depend on whether there is the intrusion structure or not, and the charge-discharge characteristics are often improved when there is the intrusion structure (described later).

The structure involving the intrusion of ion conduction component material layers 13a into the passage holes 18 can be formed by adding a precursor substance that can form the ion-conductive substance layer and a carbon precursor that can form the conductive carbon layer in the calcination environment (calcination temperature and atmosphere) as described above to an electrode active material 12 having the ion-conductive substance layer 13 formed in advance on the surface thereof, mixing the mixture sufficiently with powerful mechanical means, and then carrying out the calcination as described above.

It has been confirmed that a similar structure can also be formed by simply adding a precursor substance that can form the ion-conductive substance layer and the carbon precursor that can form the conductive carbon layer to the electrode active material 12, or the ingredients or a reaction intermediate thereof, without forming the ion-conductive substance layer 13 in advance on the surface of the electrode active material 12, mixing the mixture sufficiently with powerful mechanical means, and then carrying out the calcination as described above.

An electrode material 10 for a secondary battery in which the primary particles of the electrode active material 12 as described above are bound to each other via at least part of the ion-conductive substance 13 and/or the conductive carbon layer 14 to form secondary particles as shown in FIG. 2 has, when used in a secondary battery, sufficient electron conductivity and ion conductivity for charge and discharge of the secondary battery. Reference numeral 11 indicates a primary particle of the electrode material for a secondary battery.

[Example 1]

Reagents $LiOH \cdot H_2O$, $FeC_2O_4 \cdot 2H_2O$ and $NH_4H_2PO_4$ were sufficiently ground and mixed such that Li and P were present at a stoichiometric ratio relative to Fe, in other words, at a mixing ratio corresponding to a molar ratio Li:Fe:P of 1:1:1, and the mixture (powder) was subjected to primary calcination in an $N_2$ gas stream at 400°C for 10 hours. Approximately 7 parts by mass of a 250°C softening point pitch MCP-250D, manufactured by JFE Chemical Corporation, was added to 100 parts by mass of the primary calcination intermediate, and the mixture was sufficiently ground and mixed. The resulting mixture was subjected to secondary calcination in an $N_2$ gas stream at 780°C for 10 hours.

In this Example 1, the ground and mixed ingredients and the reaction intermediate after the primary calcination were exposed to the atmosphere (approximately 20°C, relative humidity: approximately 60 %) for about one day. As a result, the ingredient mixture absorbed approximately 1 % by mass of water from the atmosphere. Moessbauer spectroscopy and saturation magnetization measurement revealed that the reaction intermediate exposed to the atmosphere after the primary calcination contained iron oxide $\gamma$-$Fe_2O_3$ equivalent to a content of approximately 20,000 ppm by mass. The iron oxide can be considered to be generated as a result of the exposure to the atmosphere described above.

The secondary calcination product was coarsely crushed to separate the grains, whereby an $LiFePO_4$ positive electrode material having an Li ion conductive layer and a conductive carbon layer formed by pyrolysis of the pitch and deposited on the Li ion conductive layer was obtained. The positive electrode material had a specific surface area of approximately 20.5 $m^2$/g, an average diameter of approximately 70 nm as observed under an electron microscope, and a carbon deposition amount of 5.6 % by mass. This is referred to as Example 1.

Magnetization measurement conducted on the positive electrode material sample obtained in Example 1 at 25°C and 60 K using a SQUID magnetic fluxmeter revealed that the positive electrode material contained approximately 5,000 ppm by mass of a ferromagnetic component (corresponding value based on the assumption that the ferromagnetic component is metal iron). Also, Moessbauer spectroscopy conducted on the sample at 25°C and approximately 85 K revealed the presence of a doublet (double) peak with a narrow split in the isotope peak shift (IS) value range of approximately -0.5 to 1 mm/s corresponding to a trivalent Fe compound and $Fe_2P$ (more precisely, the Moessbauer spectral peak of $Fe_2P$ is not doublet but exhibits a peak having a shape close to that of a doublet peak).

Comparison of the peaks at the two temperatures revealed that a trivalent Fe compound and $Fe_2P$ were both present at a concentration of 3 % in terms of the molar distribution rate of Fe atoms in the sample of Example 1. In the case of a positive electrode material separately produced from ingredients which had not been ground sufficiently and had been exposed to the atmosphere for a longer time under the same 780°C secondary calcination condition, the ferromagnetic component increased and a sextet (sixfold) peak corresponding to metal iron ($\alpha$-Fe) as a ferromagnetic by-product was observed in Moessbauer spectroscopy performed at 25°C on samples containing 1 atomic mol % or more of the positive electrode material.

It is, therefore, believed that the ferromagnetic component in the positive electrode material of Example 1 is also metal iron. The metal iron was formed by reduction of iron oxide present in the reaction intermediate before the secondary calcination by carbon generated together during the secondary calcination or the pitch as a precursor thereof.

When the secondary calcination temperature is lower than approximately 700°C, the metal iron is not reduced to metal and often remains in the form of FeO or related substances in the positive electrode material.

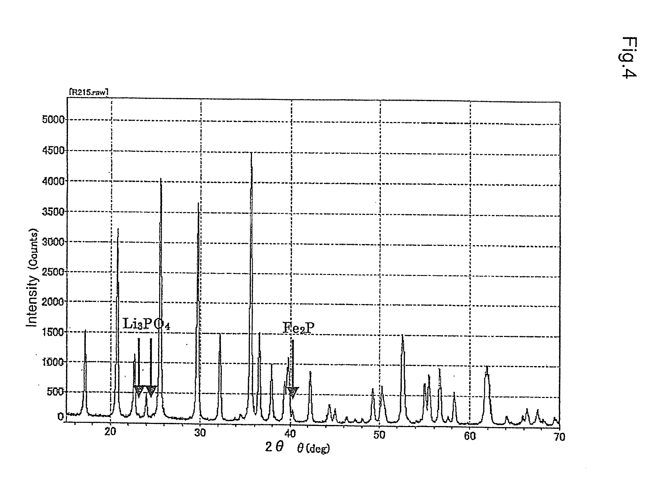

FIG. 4 shows a result of powder X-ray diffraction performed on the positive electrode material obtained in Example 1. In the result of diffraction in Example 1 shown in FIG. 4, a crystal diffraction peak of $Fe_2P$ is observed at a position of $2\theta$ = approximately 40.3 degrees in addition to the peak of the major component $LiFePO_4$, and slight crystal diffraction peaks of $Li_3PO_4$ are observed at positions of $2\theta$ = approximately 22.9 degrees and 24.8 degrees. These results indicate that the positive electrode material sample of Example 1 is a pyrolytic carbon layer-deposited $LiFePO_4$ positive electrode material containing a ferromagnetic Fe component (metal iron), a trivalent Fe compound, $Li_3PO_4$ crystal and $Fe_2P$ crystal as impurities, and that the Li and phosphoric acid in the mixed ingredients became excessive as a result of the formation of the by-products.

The metal iron contained in the positive electrode material did not undergo air oxidation even when the positive electrode material was exposed to the atmosphere for 1 to 2 months. It is, therefore, believed that the coexisting metal iron and the Li ion conductive layer formed together therewith are present beneath the conductive carbon layer formed by pyrolysis of the pitch.

As a result, the positive electrode material is believed to have an Li ion conductive layer substance layer formed on an active material $LiFePO_4$ and a conductive carbon layer formed on the Li ion conductive layer substance layer.

[Comparative Example 1]

A positive electrode material of Comparative Example 1 was produced under the same conditions as those in Example 1 except that the ingredients and the intermediate were handled in such a way that as little water and oxygen as possible were introduced thereinto and were kept away from the atmosphere until the sample was taken out after the secondary calcination. The positive electrode material had a specific surface area of 20.0 $m^2$/g, an average diameter of approximately 90 nm as observed under an electron microscope, and a carbon deposition amount of 5.6 % by mass.

Magnetization measurement conducted at 25°C and 60K using a SQUID magnetic fluxmeter on the positive electrode material sample obtained in Comparative Example 1 revealed that the amounts of ferromagnetic and antiferromagnetic components were both smaller than the detection lower limit (smaller than 0.001 emu/g or smaller than approximately 5 ppm by mass in terms of metal iron in the positive electrode material).

Also, when Moessbauer spectroscopy was conducted at 25°C and approximately 85K on the sample, no peak or shoulder was observed in the isotope peak shift (IS) value range of -0.5 to 1 mm/s corresponding to a trivalent Fe compound and $Fe_2P$, and peaks corresponding to other by-product Fe compounds were not observed either.

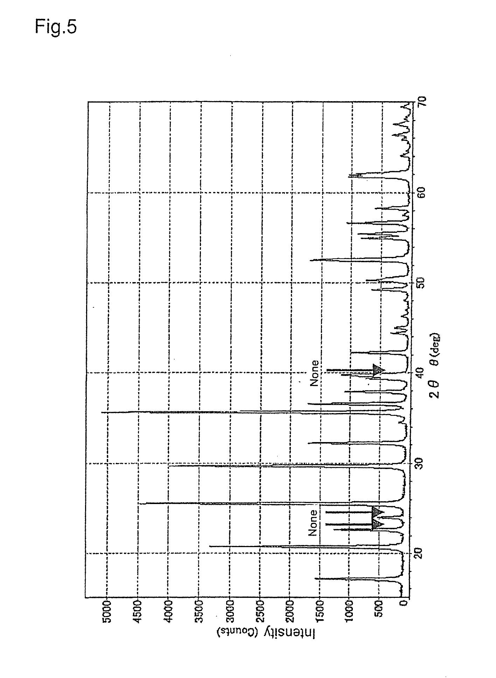

FIG. 5 shows a result of powder X-ray diffraction performed on the positive electrode material obtained in Comparative Example 1. In the case of the positive electrode material of Comparative Example 1, the crystal diffraction peak of $Fe_2P$ at a position of $2\theta$ = approximately 40.3 degrees and the crystal diffraction peaks of $Li_3PO_4$ at positions of $2\theta$ = approximately 22.9 degrees and 24.8 degrees, which were observed in Example 1, and diffraction peaks of other crystalline substances were not observed at all.

It is believed from the above results that the positive electrode material sample of Comparative Example 1 is an $LiFePO_4$ positive electrode material which is almost free of impurities and which has only a pyrolytic carbon layer and has no Li ion-conductive substance layer.

Coating liquids were prepared by adding acetylene black as a conductive aid and polyvinylidene fluoride (PVDF) as a binder to the positive electrode materials of the Example 1 and Comparative Example 1 at a positive electrode material: conductive aid: binder amount ratio of 91:4:5, and mixing and dispersing the mixture in N-methylpyrrolidone (NMP) as a dispersion solvent. Each coating liquid was applied to an aluminum foil, and dried and pressed, whereby a positive electrode formulation having a positive electrode material supported amount of approximately 8 $mg/cm^2$ and a

coated layer thickness of approximately 40 $\mu$m was prepared. Then, 2032 type coin batteries were  fabricated by incorporating these positive electrode formulation in a face-to-face relationship with a metal Li foil negative electrode with a porous polyolefin separator interposed therebetween and adding an electrolytic solution prepared by mixing 1M-LiPF$_6$/ethylene carbonate and ethylmethylcarbonate at a ratio of 3:7.

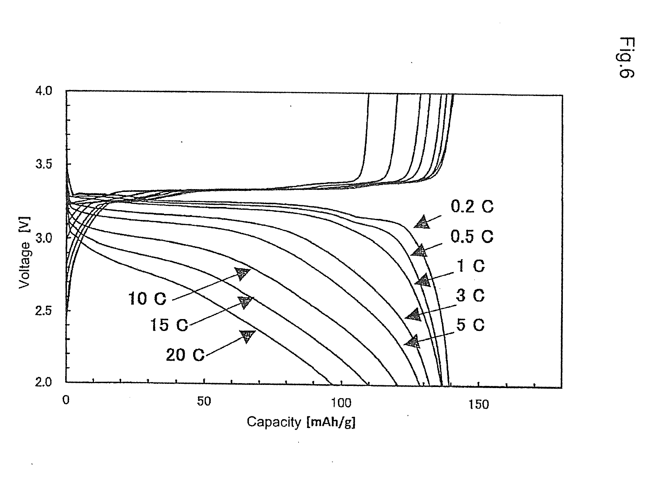

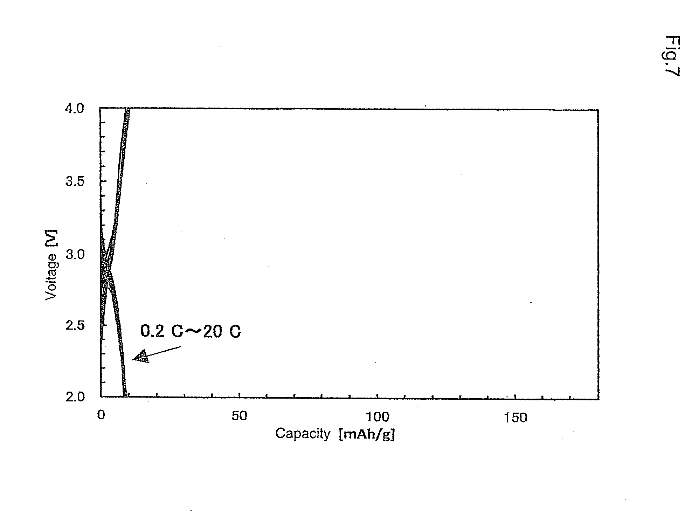

The results of discharge rate characteristics tests conducted on the coin batteries of Example 1 and Comparative Example 1 under constant current charge (0.2C, final voltage: 4.0 V)-constant current discharge (final voltage: 2.0 V) conditions to evaluate the charge-discharge characteristics thereof are shown in FIG. 6 and FIG. 7, respectively.

It can be understood from FIG. 6 that the positive electrode material of Example 1, which is assumed to have an Li ion-conductive substance layer resulting from by-products formed by exposing the ground ingredients and the reaction intermediate to the atmosphere under controlled specific conditions, exhibits good discharge rate characteristics among conductive carbon layer-deposited LiFePO$_4$ positive electrode materials obtained from a stoichiometric ratio composition by solid phase calcination.

In contrast, as shown in FIG. 7, the positive electrode material of Comparative Example 1, which had not been subjected to the formation of by-products and therefore is assumed to have no Li ion-conductive substance layer, among conductive carbon layer deposited LiFePO$_4$ positive electrode materials obtained from a stoichiometric ratio composition by solid phase calcination was hardly able to discharge even under low discharge rate conditions. This is believed to be because an Li ion conduction path connecting the passage holes in the conductive carbon layer and the end faces of the electrode active material was formed in Example 1 because the Li ion-conductive substance layer was formed whereas the path was not formed in Comparative Example 1.

When the battery using the positive electrode material of Example 1 was charged and discharged for 100 cycles at a charge and discharge rate of 1C at atmosphere temperatures of 25°C and 40°C, any deterioration, such as a decrease in charge-discharge capacity, was not observed at both the temperatures.

In general, it is considered that ferromagnetic components, such as metal iron and iron oxide, present in an LiFePO$_4$ positive electrode material deteriorate the cycle characteristics because ferromagnetic components are eluted during charge and discharge at a temperature higher than normal temperature, are migrated to the negative electrode side and deposited on the negative electrode  again as metal iron, and electrolyze the electrolytic solution.

However, such a phenomenon is not observed in the positive electrode material of Example 1 as described above. This is believed to be because, in Example 1, the ferromagnetic component (assumed to be metal iron) present in the positive electrode material is completely covered with and embedded in the conductive carbon layer formed by pyrolysis and isolated from the outside environment, and is therefore kept away from the electrolytic solution as described above.

In the evaluation conducted by the inventors, it has been confirmed that ferromagnetic components, such as iron oxide and metal iron, have no notable adverse effect on the above-mentioned high-temperature charge and discharge cycle characteristics of a conductive carbon-deposited LiFePO$_4$ positive electrode material obtained from stoichiometric ingredients by calcination and having the same configuration as the positive electrode material of Example 1 as long as the content of the ferromagnetic components is below approximately 1 % by mass (10,000 ppm by mass).

In the case of a positive electrode material produced under the same conditions as those in Example 1 except that the secondary calcination temperature was lowered to 700°C, the formation of Fe$_2$P was not observed in the results of Moessbauer spectroscopy and X-ray diffraction, and Moessbauer polarization measurement thereof showed that the content of a trivalent Fe compound was increased instead by the amount equivalent thereto. The positive electrode material exhibited good rate-followability at a high rate, similar to that shown in FIG. 6. It is, therefore, not considered that the improvement of the discharge characteristics in Example 1 described above is due to the effect of the formation of the by-product Fe$_2$P.

[Example 2]

An LiFePO$_4$ positive electrode material (active material: ion conductive layer composition ratio = 0.9 LiFePO$_4$: 0.025 Li$_4$P$_2$O$_7$) having an Li$_4$P$_2$O$_7$ Li ion-conductive substance layer and a pyrolytic carbon layer deposited on the Li ion-conductive substance layer by vapor deposition was synthesized from an ingredient mixture in which Li and P ingredients were excessive relative to the theoretical composition of an olivine-type LiFePO$_4$ active material in the following manner.

Reagents Li$_2$CO$_3$, NH$_4$H$_2$PO$_4$ and FeC$_2$O$_4$ ·2H$_2$O were mixed at such a ratio that Li and P were excessive to a certain extent relative to Fe as compared to the theoretical composition ratio of LiFePO$_4$, and the mixture was ground. Then, the mixture was heated in a nitrogen gas stream flowing at a rate of 500 ml/min while being rotated in a quartz glass sample heating tube of a rotary furnace, and maintained at 500°C for 5 hours. Then, the temperature was increase to 700°C, and butane gas as a carbon layer precursor was introduced into the sample heating tube at a rate of 100 ml/min for 5 minutes so that a conductive carbon layer could be deposited on the surface of the active material particles during calcination with an Li ion conductive layer deposited thereon.

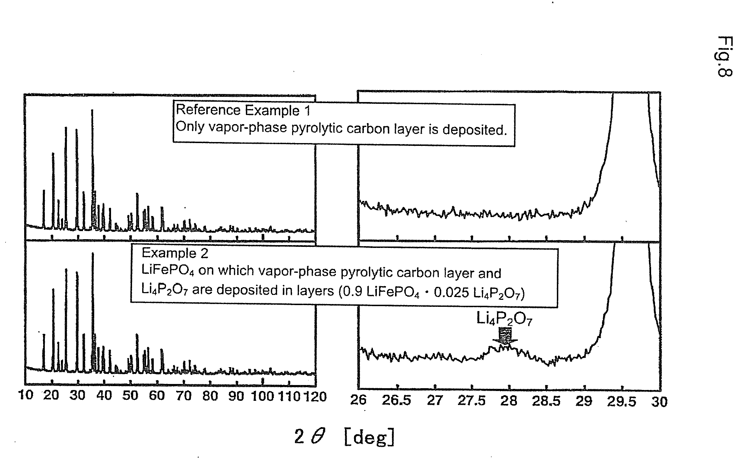

The positive electrode material obtained as described above had a carbon content of 1.8 % by mass. The positive electrode material had a specific surface area of approximately 8 $m^2$/g (area-equivalent diameter or approximately 110 nm). A result of powder X-ray diffraction performed on the positive electrode material using a Cu-K$\alpha$-ray source is shown in FIG. 8. It can be understood from the graph that $Li_4P_2O_7$ crystal in the form of superfine particles and/or having a turbulent structure is deposited because there is a weak and broad diffraction peak at $2\theta$ = approximately 28 degrees corresponding to the position of the second highest intensity diffraction peak in the $Li_4P_2O_7$ crystal in addition to the peak of the active material $LiFePO_4$.

Because the diffraction peak intensity of the $Li_4P_2O_7$ crystal is rather weak for a substance present at an Li element distribution rate of 10 % in the positive electrode material, it is assumed that the excessive Li and P in the blended ingredients have not been completely transformed into the $Li_4P_2O_7$ crystal and an amorphous compound having a similar composition has also been deposited in a coexisting manner.

[Reference Example 1]

A positive electrode material without the formation of an Li ion-conductive substance layer derived from excessive Li and P ingredients was synthesized, as "Reference Example 1," from a stoichiometric ratio mixture by the same synthesis procedure as described above. The positive electrode material had a carbon content of 1.7 % by mass, which was generally the same as that in Example 2, and the diffraction peak of $Li_4P_2O_7$ crystal was not observed at $2\theta$ = approximately 28 degrees in the result of powder X-ray diffraction shown in FIG. 8.

Coating liquids were prepared by adding acetylene black as a conductive aid and polyvinylidene fluoride (PVDF) as a binder to the obtained positive electrode materials at a positive electrode material: conductive aid: binder amount ratio of 86:7:7, and mixing and dispersing the mixture in N-methylpyrrolidone (NMP) as a dispersion solvent. Each coating liquid was applied to an aluminum foil, and dried and pressed, whereby a positive electrode formulation having a positive electrode material supported amount of approximately 6 mg/$cm^2$ and a coated layer thickness of approximately 40 $\mu$m was prepared. Then, 2032 type coin batteries were fabricated by incorporating these positive electrode formulation opposed to a metal Li foil negative electrode with a porous polyolefin separator interposed therebetween and adding an electrolytic solution with a 1M-$LiPF_6$/ethylene carbonate: diethylcarbonate ratio of 5:5.

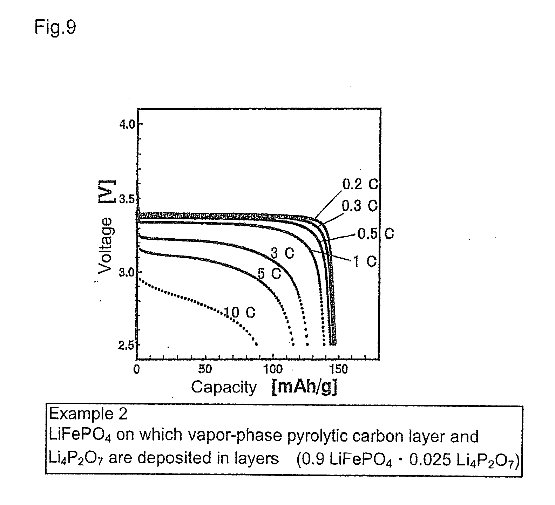

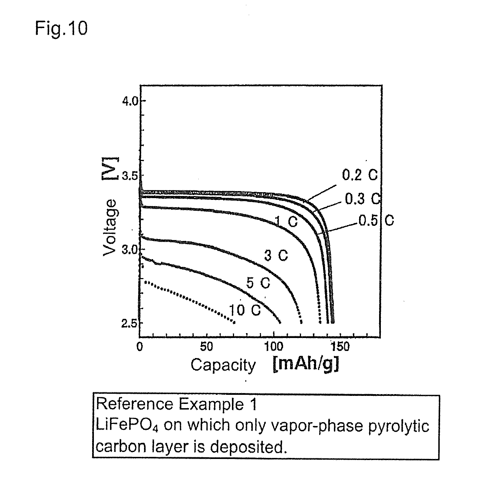

Charge-discharge characteristics of the coin batteries of Example 2 and Reference Example 1 were evaluated under constant-current charge (final voltage: 4.0 V)-constant current discharge (final voltage: 2.5 V) conditions. FIG. 9 and FIG. 10 show the constant-current discharge rate characteristics (current rate is based on the theoretical capacity of the active material) of Example 2 and Reference Example 1, respectively.

It can be understood from FIG. 9 and FIG. 10 that the $LiFePO_4$ positive electrode material of Example 2, which has an $Li_4P_2O_7$ layer deposited as an Li ion conductive layer and a conductive pyrolytic carbon deposited on the Li ion conductive layer, has lower polarization and exhibits better discharge rate characteristics than the $LiFePO_4$ positive electrode material of Reference Example 1, which has only a deposited pyrolytic carbon layer. This is believed to be because the Li ion conduction route that connects the defects in the conductive carbon layer through which the Li ions can pass and the end faces of the crystal in the b-axis direction (refer to FIG. 3) of the one-dimensional Li ion conductive olivine-type $LiFePO_4$ active material crystal is enhanced and expanded by the $Li_4P_2O_7$ as an Li ion-conductive substance layer deposited beneath the conductive carbon layer.

Magnetization measurement using a sample vibration-type magnetometer at room temperature revealed that both Example 2 and Reference Example 1 had a ferromagnetic component content of 0.01 emu/g or lower (approximately 50 ppm by mass or lower in terms of metal iron). It is, therefore, believed, in view of the result of Example 1, that, in Reference Example 1, an Li ion conduction path connecting the passage holes in the conductive carbon layer and the end faces of the electrode active material is substantially formed by the Li ion-conductive substance layer in spite of the low ferromagnetic component content. On the other hand, it is assumed that Example 2, which was obtained by blending the Li source and phosphoric acid source ingredients excessively, had better discharge rate characteristics than Reference Example 1 because the Li ion-conductive substance layer was further enhanced in Example 2.

[Example 3]

Nearly saturated aqueous ingredient solutions of reagents LiOH·$H_2O$ and $MnSO_4$·$H_2O$ were prepared at room temperature, and sequentially mixed into a 40 % aqueous dimethylsulfoxide solution of 85 % phosphoric acid ($H_3PO_4$) with stirring such that the molar ratio Li:Mn:P was 3:1:1. The mixed solution was heated to cause a reaction at approximately 105°C. After cooling, the precipitate of reaction product was recovered using a centrifugal separator. The reaction product was washed with distilled water and vacuum dried at 80°C, whereby an $LiMnPO_4$ positive electrode active material base material was obtained.

A positive electrode material sample was prepared by coating the $LiMnPO_4$ base material with a layer (coexisting layer) in which both an amorphous ion-conductive substance having an assumed composition of $Li_2FeP_2O_7$ and an

conductive carbon resulting from pyrolysis of pitch coexisted in the following manner.

First, reagents $LiOC_2H_5$, $FeC_2O_4 \cdot 2H_2O$ and $[CH_3(CH_2)_3O]_3P=O$ were mixed at a mixing ratio corresponding to an Li:Fe:P molar ratio of 2:1:2. Then, 2.74 g of the mixture was added to and mixed with 20 g of the $LiMnPO_4$ base material. Then, 1.20 g of a 250°C softening point pitch MCP-250D, manufactured by JFE Chemical Corporation, was added to and mixed with 22.74 g of the mixture of the $LiMnPO_4$ base material and the three reagents to obtain a calcination precursor mixture.

The obtained calcination precursor mixture was calcined in an $N_2$ stream at 710°C, whereby an $LiMnPO_4$ positive electrode material having a deposited layer (composite layer) in which an ion-conductive substance consisting of an Fe-containing lithium pyrophosphate salt having an assumed composition of $Li_2FeP_2O_7$ and an conductive carbon resulting from pyrolysis of pitch coexisted was obtained. This is referred to as Example 3.

The measurement value of specific surface area of the positive electrode material of Example 3 obtained by a nitrogen adsorption BET multipoint method was 40 $m^2$/g (area-equivalent diameter of approximately 44 nm).

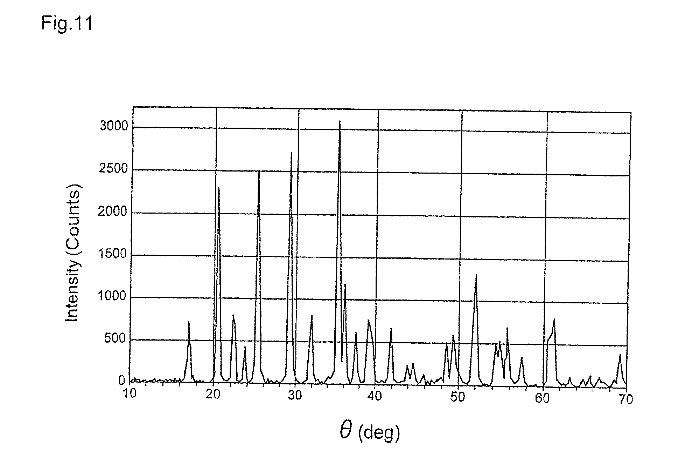

A result of powder X-ray diffraction performed on the positive electrode material is shown in FIG. 11. It can be determined that the Fe-containing lithium pyrophosphate salt is present in an amorphous form in the coexisting layer deposited on the $LiMnPO_4$ base material because no diffraction peak of crystal other than that of the active material $LiMnPO_4$ is observed in the graph.

The elementary analysis of Li, Fe and P and measurement of carbon amount by ICP emission spectroscopy revealed that the positive electrode material contains a compound having a composition equivalent to that of $Li_2FeP_2O_7$. The mass composition ratio $LiMnPO_4$:$Li_2FeP_2O_7$:C in the positive electrode material was approximately 91.7:3.9:4.4.

[Reference Example 2]

For comparison with Example 3, an $LiMnPO_4$ positive electrode material having no deposition of an Fe-containing lithium pyrophosphate salt with an assumed composition of $Li_2FeP_2O_7$ and having only a deposited layer of pyrolytic carbon was prepared in the following manner.

An $LiMnPO_4$ positive electrode material having only a deposited layer of pyrolytic carbon was produced under the same conditions as those in Example 3 except that 1.15 g of a 250°C softening point pitch MCP-250D, manufactured by JFE Chemical Corporation, alone was added to 20 g of the same $LiMnPO_4$ base material as used in Example 3. This is referred to as Reference Example 2.

The mass composition ratio $LiMnPO_4$:C in the positive electrode material was 95.6:4.4.

The measurement value of specific surface area of the positive electrode material of Reference Example 2 obtained by a nitrogen adsorption BET multipoint method was approximately 41 $m^2$/g (area-equivalent diameter of approximately 43 nm). The result of X-ray diffraction of Reference Example 2 was almost the same as that of Example 3, and there was no significant difference in the position, intensity, relative intensity ratio and half width of the crystal peak corresponding to $LiMnPO_4$.

Because the results of X-ray diffraction and the specific surface area values of Example 3 and Reference Example 2 are almost the same, it is determined that the active material $LiMnPO_4$ crystals have almost the same primary particle size ($\approx$ crystallite size) in Example 3 and Reference Example 2.

Coating liquids were prepared by adding acetylene black as a conductive aid and polyvinylidene fluoride (PVDF) as a binder to the positive electrode materials of the Example 3 and Reference Example 2 at a positive electrode material: conductive aid: binder amount ratio of 86.2:6.8:7, and mixing and dispersing the mixture in N-methylpyrrolidone (NMP) as a dispersion solvent. Each coating liquid was applied to an aluminum foil, and dried and pressed, whereby a positive electrode formulation having a positive electrode material supported amount of approximately 7.1 mg/$cm^2$ and a coated layer thickness of approximately 40 $\mu$m was prepared. Then, 2032 type coin batteries were fabricated by incorporating these positive electrode formulation electrode in a face-to-face relationship with a metal Li foil negative electrode with a porous polyolefin separator interposed therebetween and adding an electrolytic solution prepared by mixing a solution of 1 M $LiPF_6$ in ethylene carbonate and ethylmethylcarbonate at a ratio of 3:7.

The coin batteries of Example 3 and Reference Example 2 were subjected to constant current charge to 4.5 V at 0.01C and then constant voltage charge at 4.5 V (final current: 0.001C). Then, the coin batteries were subjected to constant current discharge to 2.5 V at 0.01C to measure the charge-discharge characteristics.

In addition, charge-discharge characteristics were also measured with the constant current charge condition, the final current in constant voltage charging and the constant current discharge condition changed to 0.1C, 0.01C and 0.1C, respectively.

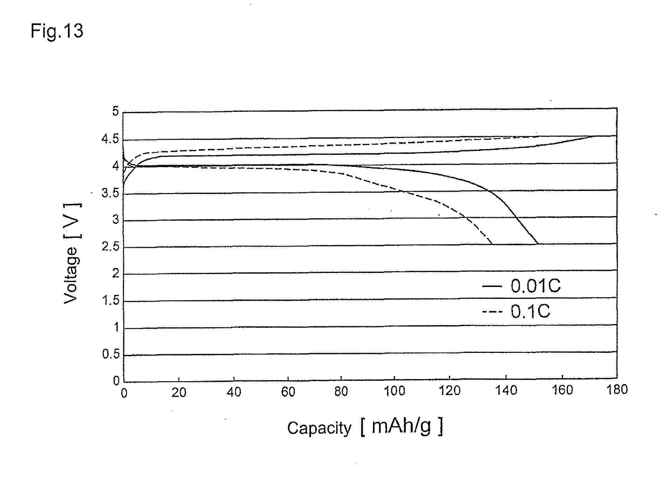

The results of the discharge tests are shown in FIG. 12 and FIG. 13, respectively. In the graphs, the capacities based on the total amount of the amorphous Fe-containing lithium pyrophosphate salt and the active material $LiMnPO_4$ are shown.

As shown in FIG. 12, the $LiMnPO_4$ positive electrode material having a deposited layer in which an amorphous Fe-containing lithium pyrophosphate salt and pyrolytic carbon derived from pitch coexisted exhibited a discharge capacity of 157 mAh/g when discharged at 0.01C and 146 mAh/g when discharged at 0.1C.

The discharge capacities based on the amount of the active material LiMnPO_4 during the discharge at 0.01C and 0.1C obtained by correcting the content of the amorphous Fe-containing lithium pyrophosphate salt were 164 mAh/g, which is close to the theoretical capacity 171 mAh/g, and 151 mAh/g, respectively.

In contrast, the positive electrode material of Reference Example 2, which had no deposition of an amorphous Fe-containing lithium pyrophosphate salt and had only a deposited layer of pyrolytic carbon, had a potential drop in the discharge curve earlier than the positive electrode material of Example 3 in the later stage of discharge at the same rate, and the discharge capacities based on the amount of the active material LiMnPO_4 during the discharge at 0.01C and 0.1 C were 152 mAh/g and 136 mAh/g, respectively, as shown in FIG. 13.

It is, therefore, understood that the LiMnPO_4 positive electrode material of Example 3, which has a deposited layer in which an amorphous Fe-containing lithium pyrophosphate salt and pyrolytic carbon derived from pitch coexist, exhibits a higher discharge capacity than the LiMnPO_4 positive electrode material of Reference Example 2, which has only a deposited carbon layer, even when the content of the amorphous Fe-containing lithium pyrophosphate salt is not corrected.

These results indicate that an LiMnPO_4 positive electrode material having crystal end faces of a one-dimensional ion-conductive LiMnPO_4 active material and a deposited layer in which an ion-conductive substance layer of an amorphous Fe-containing lithium pyrophosphate salt and a pyrolytically-generated conductive carbon coexist exhibits excellent characteristics.

It is believed that the Li_aMPO_4 positive electrode material exhibits good discharge characteristics at a low discharge rate because the ion-conductive substance layer (amorphous Fe-containing lithium pyrophosphate salt) serves as a conduction path for Li ions.

In the case of the positive electrode material of Example 3, the ion-conductive substance layer and the conductive carbon layer are simultaneously deposited on the LiMnPO_4 base material by mixing and calcining the ingredients of the ion-conductive substance layer (amorphous Fe-containing lithium pyrophosphate salt) and pitch as a carbon precursor substance. Thus, in the positive electrode material of Example 3, part of the ion-conductive substance layer covers at least part of the crystal end faces of the LiMnPO_4 positive electrode material base material through which Li ions can be diffused and at least part of the rest of the ion-conductive substance layer penetrates through the conductive carbon layer in the thickness direction thereof. In other words, it can be considered that the conductive carbon layer and the ion-conductive substance layer are present on the surface of the electrode active material with portions of the ion-conductive substance layer intruded into the passage holes of the conductive carbon layer extending in the thickness direction thereof, and these ion-conductive substance layer forms a conduction path for Li ions as a whole.

In Example 1 to Example 3, the ratio between the amounts of Li ions in the formed Li ion-conductive substance layer and the positive electrode active material was in the range of the formula (1) above. Also, observation under a transmission electron microscope and a scanning electron microscope revealed that the primary particles are bound to each other via the conductive carbon and the Li ion-conductive substance to form secondary particles.

In addition, a coexisting layer of conductive carbon and an Li ion-conductive substance was present on almost the entire surface of the primary particles in each Example and the total thickness of the layers is in the range of approximately 1 to 3 nm.

Description of Reference Numerals and Symbols

1: electrode material for secondary battery
2: electrode active material
3: ion-conductive substance layer
4: conductive carbon layer
5: cation
6: movable direction of cation
7: end face
8: passage hole
10: secondary particle of electrode material for secondary battery
11: primary particle of electrode material for secondary battery
12: electrode active material
13: ion-conductive substance layer
13a: part of ion-conductive substance layer
14: conductive carbon layer
18: passage hole

**Claims**

1. An electrode material for a secondary battery, comprising:

   crystal primary particles of an electrode active material which releases or absorbs cations of a monovalent or divalent metal when subjected to electrochemical oxidation or reduction and which has a crystal lattice in which the cations can move only in one-dimensional allowable movement direction during the process of oxidation or reduction; and
   an ion-conductive substance and conductive carbon formed by pyrolysis of a carbon precursor which coexist on the surface of the primary particles,
   wherein the ion-conductive substance has a property which allows two- or three-dimensional movement of the cations, and
   the cations are movable via a layer in which the ion-conductive substance and the conductive carbon coexist.

2. An electrode material for a secondary battery, comprising:

   crystal primary particles of an electrode active material which releases or absorbs cations of a monovalent or divalent metal when subjected to electrochemical oxidation or reduction and which has a crystal lattice in which the cations can move only in one-dimensional allowable movement direction during the process of oxidation or reduction;
   an ion-conductive substance layer present on at least part of the surface of the primary particles; and
   a conductive carbon layer formed by pyrolysis of a carbon precursor and present on at least part of the surface of at least the ion-conductive substance layer,
   wherein the ion-conductive substance layer has a property which allows two-or three-dimensional movement of the cations, and
   the cations are movable via the ion-conductive substance layer and the conductive carbon layer.

3. An electrode material for secondary battery, comprising:

   crystal primary particles of an electrode active material which releases or absorbs cations of a monovalent or divalent metal when subjected to electrochemical oxidation or reduction and which has a crystal lattice in which the cations can move only in one-dimensional allowable movement direction during the process of oxidation or reduction;
   an ion-conductive substance layer present on at least part of the surface of  the primary particles; and
   a conductive carbon layer formed by pyrolysis of a carbon precursor and present on at least part of the surface of at least the ion-conductive substance layer,
   wherein the ion-conductive substance layer has a property which allows two-or three-dimensional movement of the cations,
   the conductive carbon layer has passage holes which allow passage of the cations in the thickness direction of the conductive carbon layer, and
   end faces of the primary particles across the allowable movement direction of the cations and the passage holes of the conductive carbon layer are connected via the ion-conductive substance layer.

4. The electrode material for a secondary battery according to any one of Claims 1 to 3,
   wherein the electrode active material is a substance represented by the general formula $AMDO_4$,

   in the general formula $AMDO_4$,
   A is a cation and one or a combination of two or more of Li, Na and Mg,
   M is one or a combination of two or more of Fe, Mn, Co and Ni, or contains one or a combination of two or more of Fe, Mn, Co and Ni and one or a combination of two or more of Mg, Ca, Sc, Ti, Zr, V, Nb, Cr, Mo, W, Cu, Zn, Al, Ga, In and Sn,
   D is P, or a combination of P and one or two or more of Al, Si, S, V and Mo, and
   electro-neutrality is maintained in the $AMDO_4$ as a whole.

5. The electrode material for a secondary battery according to Claim 4, wherein the ion-conductive substance layer comprises a layer of an oxoacid salt containing A and D in the $AMDO_4$ and at least has an ion conductive function for the cations.

6. The electrode material for a secondary battery according to any one of Claims 1 to 5, wherein the ion-conductive substance forming the ion-conductive substance layer is

   (A) one selected from the group consisting of oxides, sulfides, phosphates and silicates containing cations of a monovalent or divalent metal and nitrides thereof, or
   (B) a composite of two or more substances selected from the group (A).

7. The electrode material for a secondary battery according to any one of Claims 1 to 6, wherein the ion-conductive substance layer has an amorphous structure in at least a portion thereof.

8. The electrode material for a secondary battery according to any one of Claims 1 to 7, wherein the ratio between the molar distribution rate of the cations in the electrode active material and the molar distribution rate of the cations in the ion-conductive substance is in the range of the formula (1) below:
   [Mathematical formula 1]

$$0.01 \leq \text{(Molar distribution rate of cations in ion-conductive substance)}/\text{(Molar distribution rate of cations in electrode active material)} \leq 0.2 \quad (1)$$

9. The electrode material for a secondary battery according to any one of Claims 1 to 8, wherein at least portions of the ion-conductive substance layer are intruded into the passage holes of the conductive carbon layer.

10. The electrode material for a secondary battery according to any one of Claims 1 to 9, wherein a plurality of the primary particles are bound via at least part of the ion-conductive substance and/or the conductive carbon layer to form secondary particles.

11. A secondary battery, containing the electrode material for a secondary battery according to any one of Claims 1 to 10 as a constituent member of a positive electrode or negative electrode.

12. A method for producing an electrode material for a secondary battery having an conductive carbon layer, including: obtaining an electrode active material represented by the general formula $AMDO_4$ by subjecting a calcination precursor containing an ingredient as an A source, an ingredient as an M source and an ingredient as a D source to primary calcination; and subjecting the electrode active material together with a carbon precursor which forms conductive carbon when pyrolyzed to secondary calcination,
   in the general formula $AMDO_4$,
   A is a cation and one or a combination of two or more of Li, Na and Mg,
   M is one or a combination of two or more of Fe, Mn, Co and Ni, or contains one or a combination of two or more of Fe, Mn, Co and Ni and one or a combination of two or more of Mg, Ca, Sc, Ti, Zr, V, Nb, Cr, Mo, W, Cu, Zn, Al, Ga, In and Sn,
   D is P, or a combination of P and one or two or more of Al, Si, S, V and Mo, and
   electro-neutrality is maintained in the $AMDO_4$ as a whole,
   the method comprising at least one of the steps of:

   a first step, which is performed as a pretreatment before the primary calcination, of regulating at least one of the coexisting water amount in the ingredient mixture and the target grain size of the ingredient mixture; and
   a second step of oxidizing the calcination precursor and/or the intermediate product after the primary calcination in at least one of the stage of the primary calcination and the stages before and after the primary calcination.

13. A method for producing an electrode material for a secondary battery having an conductive carbon layer, the method including: obtaining an electrode active material represented by the general formula $AMDO_4$ by subjecting a calcination precursor containing an ingredient as an A source, an ingredient as an M source and an ingredient as a D source to primary calcination; and subjecting the electrode active material together with a carbon precursor which forms conductive carbon when pyrolyzed to secondary calcination,
   in the general formula $AMDO_4$,
   A is a cation and one or a combination of two or more of Li, Na and Mg,
   M is one or a combination of two or more of Fe, Mn, Co and Ni, or contains one or a combination of two or more of Fe, Mn, Co and Ni and one or a combination of two or more of Mg, Ca, Sc, Ti, Zr, V, Nb, Cr, Mo, W, Cu, Zn, Al, Ga, In and Sn,

D is P, or a combination of P and one or two or more of Al, Si, S, V and Mo, and

electro-neutrality is maintained in the $AMDO_4$ as a whole,

wherein the ingredients are mixed at such a ratio that A and D are stoichiometrically excessive relative to M as compared to those in a theoretical composition of the electrode active material represented by the general formula $AMDO_4$,

an ingredient mixture having the excessive composition is calcined to form an electrode active material having an ion-conductive substance layer on at least part of the surface thereof in the primary calcination, and

the electrode active material is then subjected to secondary calcination together with the carbon precursor.

14. A method for producing an electrode material for a secondary battery,

the method comprising: subjecting a mixture of an electrode active material represented by the general formula $AMDO_4$,

    wherein A is a cation and one or a combination of two or more of Li, Na and Mg,

    M is one or a combination of two or more of Fe, Mn, Co and Ni, or contains one or a combination of two or more of Fe, Mn, Co and Ni and one or a combination of two or more of Mg, Ca, Sc, Ti, Zr, V, Nb, Cr, Mo, W, Cu, Zn, Al, Ga, In and Sn,

    D is P, or a combination of P and one or two or more of Al, Si, S, V and Mo, and

    electro-neutrality is maintained in the $AMDO_4$ as a whole, and

a mixture of ingredients of an ion-conductive substance layer to primary calcination; and

subjecting a mixture of the primary calcination product and a carbon precursor which forms conductive carbon when pyrolyzed to secondary calcination.

15. A method for producing an electrode material for a secondary battery,

the method comprising: calcining a calcination precursor obtained by mixing:

    an electrode active material represented by the general formula $AMDO_4$,

        wherein A is a cation and one or a combination of two or more of Li, Na and Mg,

        M is one or a combination of two or more of Fe, Mn, Co and Ni, or contains one or a combination of two or more of Fe, Mn, Co and Ni and one or a combination of two or more of Mg, Ca, Sc, Ti, Zr, V, Nb, Cr, Mo, W, Cu, Zn, Al, Ga, In and Sn,

        D is P, or a combination of P and one or two or more of Al, Si, S, V and Mo, and

        electro-neutrality is maintained in the $AMDO_4$ as a whole;

    a mixture of ingredients of an ion-conductive substance layer to primary calcination; and

    a carbon precursor which forms conductive carbon when pyrolyzed.

16. The method for producing an electrode material for a secondary battery according to any one of Claims 10 to 15, wherein a carbon precursor which generates a gas is used to form the passage holes in the secondary calcination.

Fig.1

Fig.2

Fig.3

FeO$_6$ octahedron

P O$_4$ tetrahedron

Li$^+$

a

c

b

Fig.4

Fig.5

Fig.6

Fig.7

Fig.8

Fig.9

Example 2
LiFePO$_4$ on which vapor-phase pyrolytic carbon layer and
Li$_4$P$_2$O$_7$ are deposited in layers   (0.9 LiFePO$_4$ · 0.025 Li$_4$P$_2$O$_7$)

Fig.10

Reference Example 1
LiFePO₄ on which only vapor-phase pyrolytic
carbon layer is deposited.

Fig.11

Fig.12

Fig.13

### INTERNATIONAL SEARCH REPORT

| International application No. |
| --- |
| PCT/JP2012/058203 |

**A. CLASSIFICATION OF SUBJECT MATTER**
*H01M4/58*(2010.01)i, *C01B25/45*(2006.01)i, *H01M4/36*(2006.01)i

According to International Patent Classification (IPC) or to both national classification and IPC

**B. FIELDS SEARCHED**

Minimum documentation searched (classification system followed by classification symbols)
H01M4/58, C01B25/45, H01M4/36

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2008-210701 A (Sanyo Electric Co., Ltd.),<br>11 September 2008 (11.09.2008),<br>claims 1 to 6; examples<br>& US 2008/0203363 A1 & KR 10-2008-0079588 A<br>& CN 101257111 A | 1-4,6,9-11,<br>15,16<br>5,7,8,12-14 |
| P,X | JP 2011-213587 A (Toda Kogyo Corp.),<br>27 October 2011 (27.10.2011),<br>claims 1 to 9; paragraphs [0033] to [0059];<br>examples<br>& WO 2011/115211 A1 | 1-16 |
| P,X | JP 2011-238523 A (Toyota Motor Corp.),<br>24 November 2011 (24.11.2011),<br>claims 1 to 5; paragraphs [0024] to [0042];<br>examples<br>(Family: none) | 1-12,15,16 |

☒ Further documents are listed in the continuation of Box C.   ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>22 June, 2012 (22.06.12) | Date of mailing of the international search report<br>03 July, 2012 (03.07.12) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2012/058203

C (Continuation). DOCUMENTS CONSIDERED TO BE RELEVANT

| Category* | Citation of document, with indication, where appropriate, of the relevant passages | Relevant to claim No. |
|---|---|---|
| P,A | JP 2011-192499 A (Sumitomo Electric Industries, Ltd.), 29 September 2011 (29.09.2011), claims 1, 2; examples (Family: none) | 1-16 |
| A | JP 2006-66081 A (Nissan Motor Co., Ltd.), 09 March 2006 (09.03.2006), claims 1 to 14; paragraphs [0030] to [0033]; examples (Family: none) | 1-16 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001015111 A
- JP T2010517240 W
- JP HEI117942 A
- JP 2002373643 A
- JP 2003059492 A
- JP 3906944 B
- JP 2002151082 A
- JP 2004095385 A
- JP 2007119304 A
- JP HEI9134724 A
- JP 2004063386 A
- JP 2003157845 A

**Non-patent literature cited in the description**

- **BYOUNGWOO KANG ; GERBRAND CEDER.** *Nature,* 2009, vol. 458, 190-193